# EUROPEAN PATENT APPLICATION

(11) **EP 4 765 604 A1**
(43) Date of publication of application: **24.06.2026**
(21) Application number: 24854040.3
(22) Date of filing: 01.03.2024
(51) Int. Cl.: H02M 1/08, H02M 1/00, H02M 7/48

(54) **GATE DRIVE CIRCUIT, POWER CONVERSION DEVICE, AND MOTOR UNIT**

(30) Priority: 15.08.2023 JP 2023132269
(71) Applicant: Nidec Corporation, Minami-ku, Kyoto-shi, Kyoto 601-8205 (JP)
(72) Inventor: KATAOKA Kotaro, Kyoto-shi, Kyoto 601-8205 (JP)
(74) Representative: Viering, Jentschura & Partner mbB Patent- und Rechtsanwälte
(86) International application number: PCT/JP2024/007862
(87) International publication number: WO 2025/037447

(57) **Abstract**

One embodiment of the gate drive circuit according to the present invention drives a switching element and comprises: a charging circuit that charges the input capacitance of a switching element by applying a gate voltage to the gate terminal of the switching element; and a discharging circuit that discharges the input capacitance. The charging circuit has: a first charging path having a series circuit in which a first switch and an inductor are connected in series between a first terminal and a first node; and a second charging path in which a second switch is connected between the first terminal and the first node. When the switching element is turned on, charging is performed through the first charging path after charging through the second charging path. The discharging circuit has a configuration in which a path through which the discharge current flows from the gate terminal is switched between a first discharging path and a second discharging path having a resistance value higher than that of the first discharging path.

## Description

### Field of the Invention

The present invention relates to a gate drive circuit, a power conversion device, and a motor unit.

### Background

In recent years, switching elements made of silicon carbide (SiC) have been attracting attention as power semiconductor switching elements with high breakdown voltage, high heat resistance, and high-speed switching. The switching element made of SiC has low transconductance, and thus, on-resistance does not decrease until a sufficiently high voltage is applied to the gate terminal, resulting in the occurrence of conduction loss.

The switching of the switching element at a high speed reduces loss, but noise and surge characteristics are deteriorated. When the switching element is turned on, a reverse recovery current generated from a body diode parasitic on the switching element is superimposed on a current waveform of the switching element. When the switching element is switched at a high speed, the reverse recovery current becomes steep, causing the deterioration of noise and surge characteristics. When the switching element is turned off, a surge voltage is generated due to a parasitic inductance component included in a current path of the switching element.

For example, Japanese Patent Application Publication: JP 2005-039988 A discloses a gate drive circuit having a circuit configuration that reduces switching loss and noise as a gate drive circuit that drives a switching element.

### Citation List

### Patent Literature

Patent Document 1: Japanese Patent Application Publication: JP 2005-039988 A

### Summary

### Technical Problem

As described above, there has been a demand for development of a gate drive circuit capable of achieving both reduction of switching loss of a switching element to be driven and suppression of noise and surge generated at the time of switching.

The present invention has been proposed in view of the above circumstances, and an object thereof is to provide a gate drive circuit capable of achieving both reduction of switching loss of a switching element to be driven and suppression of noise and surge generated at the time of switching, and a power conversion device and a motor unit including the gate drive circuit.

### Solution to Problem

According to an aspect of the present invention, there is provided a gate drive circuit configured to drive a switching element, the gate drive circuit including a charging circuit configured to charge input capacitance of the switching element by applying a gate voltage to a gate terminal of the switching element, and a discharging circuit configured to discharge the input capacitance, wherein the charging circuit includes a first charging path including a series circuit in which a first switch and an inductor are connected in series between a first terminal and a first node, and a second charging path in which a second switch is connected between the first terminal and the first node, and is configured to perform charging through the second charging path and then to perform charging through the first charging path when the switching element is turned on, and the discharging circuit is configured to switch a path through which a discharge current flows from the gate terminal between a first discharging path and a second discharging path having a resistance value higher than a resistance value of the first discharging path.

According to an aspect of the present invention, there is provided a power conversion device including a bridge circuit including a plurality of switching elements, a plurality of gate drive circuits provided corresponding one by one to the plurality of switching elements, the plurality of gate drive circuits being configured to individually drive the corresponding switching elements, and a control unit configured to control the plurality of gate drive circuits, wherein each of the plurality of gate drive circuits includes a charging circuit configured to charge input capacitance of the corresponding switching element by applying a gate voltage to a gate terminal of the corresponding switching element, and a discharging circuit configured to discharge the input capacitance, the charging circuit includes a first charging path including a series circuit in which a first switch and an inductor are connected in series between a first terminal and a first node, and a second charging path in which a second switch is connected between the first terminal and the first node, and is configured to perform charging through the second charging path and then to perform charging through the first charging path when the switching element is turned on, and the discharging circuit is configured to switch a path through which a discharge current flows from the gate terminal between a first discharging path and a second discharging path having a resistance value higher than a resistance value of the first discharging path.

According to an aspect of the present invention, there is provided a motor unit including a motor and the power conversion device according to the above-mentioned aspect, the power conversion device being configured to supply power to the motor.

### Advantageous Effects of Invention

According to the above-mentioned aspects of the present invention, it is possible to provide a gate drive circuit capable of achieving both reduction of switching loss of a switching element to be driven and suppression of noise and surge generated at the time of switching, and a power conversion device and a motor unit including the gate drive circuit.

### Brief Description of The Drawings

FIG. 1 is a diagram schematically illustrating a configuration of a motor unit 1 in a first embodiment.
FIG. 2 is a circuit configuration diagram of a gate drive circuit GDA in the first embodiment.
FIG. 3 is a first diagram illustrating a path of a current flowing through the gate drive circuit GDA when a switching element TR is turned on.
FIG. 4 is a second diagram illustrating a path of a current flowing through the gate drive circuit GDA when the switching element TR is turned on.
FIG. 5 is a third diagram illustrating a path of a current flowing through the gate drive circuit GDA when the switching element TR is turned on.
FIG. 6 is a fourth diagram illustrating a path of a current flowing through the gate drive circuit GDA when the switching element TR is turned on.
FIG. 7 is a diagram illustrating an example of waveforms of a drain-source voltage Vds and a drain current Id of the switching element TR when the switching element TR is turned on.
FIG. 8 is a first diagram illustrating a path of a current flowing through the gate drive circuit GDA when the switching element TR is turned off.
FIG. 9 is a second diagram illustrating a path of a current flowing through the gate drive circuit GDA when the switching element TR is turned off.
FIG. 10 is a diagram illustrating an example of waveforms of a drain-source voltage Vds and a drain current Id of the switching element TR when the switching element TR is turned off.
FIG. 11 is a diagram illustrating a specific example of the gate drive circuit GDA.
FIG. 12 is a circuit configuration diagram of a gate drive circuit GDB according to a second embodiment.
FIG. 13 is a first diagram illustrating a path of a current flowing through the gate drive circuit GDB when the switching element TR is turned on.
FIG. 14 is a second diagram illustrating a path of a current flowing through the gate drive circuit GDB when the switching element TR is turned on.
FIG. 15 is a third diagram illustrating a path of a current flowing through the gate drive circuit GDB when the switching element TR is turned on.
FIG. 16 is a fourth diagram illustrating a path of a current flowing through the gate drive circuit GDB when the switching element TR is turned on.
FIG. 17 is a first diagram illustrating a path of a current flowing through the gate drive circuit GDB when the switching element TR is turned off.
FIG. 18 is a second diagram illustrating a path of a current flowing through the gate drive circuit GDB when the switching element TR is turned off.
FIG. 19 is a diagram illustrating a specific example of the gate drive circuit GDB.
FIG. 20 is a circuit configuration diagram illustrating a first modification of the gate drive circuit GDA.
FIG. 21 is a circuit configuration diagram illustrating a second modification of the gate drive circuit GDA.
FIG. 22 is a circuit configuration diagram illustrating a third modification of the gate drive circuit GDA.
FIG. 23 is a circuit configuration diagram illustrating a fourth modification of the gate drive circuit GDA.
FIG. 24 is a circuit configuration diagram illustrating a fifth modification of the gate drive circuit GDA.
FIG. 25 is a circuit configuration diagram illustrating a first modification of the gate drive circuit GDB.
FIG. 26 is a circuit configuration diagram illustrating a second modification of the gate drive circuit GDB.
FIG. 27 is a circuit configuration diagram illustrating a sixth modification of the gate drive circuit GDA.

### Detailed Description

Embodiments of the present invention will be described in detail below with reference to the drawings.

### First Embodiment

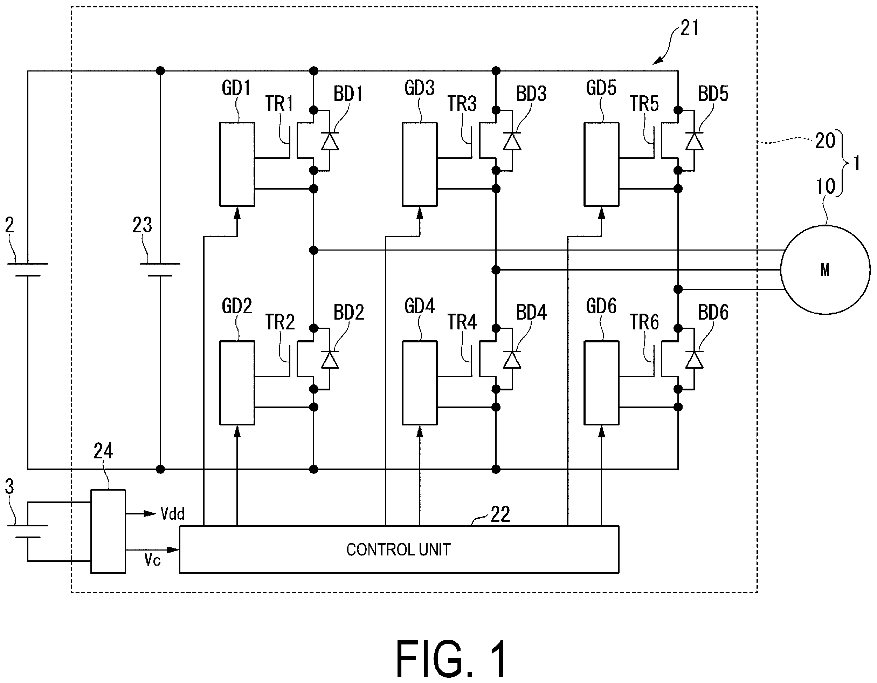

First, a first embodiment of the present invention will be described. FIG. 1 is a diagram schematically illustrating a configuration of a motor unit 1 in the first embodiment. As illustrated in FIG. 1, the motor unit 1 includes a motor 10 and a power conversion device 20. For example, the motor unit 1 is a motor unit that is used for driving and mounted on an electric vehicle. Examples of the electric vehicle include electric automobiles, hybrid vehicles, plug-in hybrid vehicles, and fuel cell vehicles. The motor 10 is, for example, a three-phase AC motor. The power conversion device 20 supplies power to the motor 10.

The power conversion device 20 is connected to the motor 10 and a first DC power source 2, and performs mutual conversion between DC power and three-phase AC power. For example, when the power conversion device 20 functions as an inverter, the power conversion device 20 converts DC power supplied from the first DC power source 2 into three-phase AC power and outputs the three-phase AC power to the motor 10. For example, the first DC power source 2 is a drive battery that outputs a relatively high DC voltage among a plurality of batteries mounted on the electric vehicle.

The power conversion device 20 includes a bridge circuit 21, six gate drive circuits GD1 to GD6, a control unit 22, a smoothing capacitor 23, and a power supply circuit 24. In the present embodiment, the bridge circuit 21 is a three-phase full-bridge circuit including six switching elements TR1 to TR6. In the present embodiment, the switching elements TR1 to TR6 included in the bridge circuit 21 are, for example, N-channel metal-oxide-semiconductor field-effect transistors (MOS-FETs). The switching elements TR1 to TR6 may be insulated-gate bipolar transistors (IGBTs). Further, the switching elements TR1 to TR6 may be switching elements made of SiC or switching elements made of Si.

The switching elements TR1, TR3, and TR5 are high-side switches of the bridge circuit 21. Drain terminals of the switching elements TR1, TR3, and TR5 are connected to a positive terminal of the first DC power source 2. The switching elements TR2, TR4, and TR6 are low-side switches of the bridge circuit 21. Source terminals of the switching elements TR2, TR4, and TR6 are connected to a negative terminal of the first DC power source 2.

A source terminal of the switching element TR1 is connected to both a drain terminal of the switching element TR2 and a U-phase terminal of the motor 10. A source terminal of the switching element TR3 is connected to both a drain terminal of the switching element TR4 and a V-phase terminal of the motor 10. A source terminal of the switching element TR5 is connected to both the drain terminal of the switching element TR6 and a W-phase terminal of the motor 10.

The switching element TR1 includes a body diode BD1 that is parasitic between the drain and the source of the switching element TR1. As an equivalent circuit, an anode terminal of the body diode BD1 is connected to the source terminal of the switching element TR1, and a cathode terminal of the body diode BD1 is connected to the drain terminal of the switching element TR1.

Similarly to the switching element TR1, the switching element TR2 includes a body diode BD2. The switching element TR3 includes a body diode BD3. The switching element TR4 includes a body diode BD4. The switching element TR5 includes a body diode BD5. The switching element TR6 includes a body diode BD6.

The six gate drive circuits GD1 to GD6 are provided corresponding to the six switching elements TR1 to TR6, respectively, and drive the corresponding switching elements. Note that "driving the switching element" includes turning on the switching element by charging input capacitance of the switching element and turning off the switching element by discharging the input capacitance of the switching element.

The gate drive circuit GD1 is provided corresponding to the switching element TR1, and drives the switching element TR1 in accordance with a control signal input from the control unit 22. The gate drive circuit GD1 is connected to the gate terminal and the source terminal of the switching element TR1. The gate drive circuit GD2 is provided corresponding to the switching element TR2, and drives the switching element TR2 in accordance with a control signal input from the control unit 22. The gate drive circuit GD2 is connected to the gate terminal and the source terminal of the switching element TR2.

The gate drive circuit GD3 is provided corresponding to the switching element TR3, and drives the switching element TR3 in accordance with a control signal input from the control unit 22. The gate drive circuit GD3 is connected to the gate terminal and the source terminal of the switching element TR3. The gate drive circuit GD4 is provided corresponding to the switching element TR4, and drives the switching element TR4 in accordance with a control signal input from the control unit 22. The gate drive circuit GD4 is connected to the gate terminal and the source terminal of the switching element TR4.

The gate drive circuit GD5 is provided corresponding to the switching element TR5, and drives the switching element TR5 in accordance with a control signal input from the control unit 22. The gate drive circuit GD5 is connected to the gate terminal and the source terminal of the switching element TR5. The gate drive circuit GD6 is provided corresponding to the switching element TR6, and drives the switching element TR6 in accordance with a control signal input from the control unit 22. The gate drive circuit GD6 is connected to the gate terminal and the source terminal of the switching element TR6.

Although details will be described below, the six gate drive circuits GD1 to GD6 have the same circuit configuration. In the following description, when the gate drive circuits GD1 to GD6 need not be distinguished, the gate drive circuits GD1 to GD6 are collectively referred to as gate drive circuits GDA. In the following description, the switching elements TR1 to TR6 may be collectively referred to as switching elements TR, and the body diodes BD1 to BD6 may be collectively referred to as body diodes BD.

The control unit 22 controls the respective gate drive circuits GD1 to GD6 by outputting a control signal to each of the gate drive circuits GD1 to GD6. Although details will be described below, timing for turning on and timing for turning off of each of the first switch SW1, the second switch SW2, the third switch SW3, the fourth switch SW4, and the fifth switch SW5, respectively, included in the gate drive circuits GD1 to GD6 are controlled by the control signals output from the control unit 22.

The control unit 22 has, for example, a function of communicating with an electronic control unit (ECU) installed in the electric vehicle. The control unit 22 receives a rotational speed command signal from the ECU, which is a higher-level control device, and outputs a control signal for rotating the motor 10 at a target rotational speed indicated by using the rotational speed command signal to each of the gate drive circuits GD1 to GD6. For example, the control unit 22 is a processor including a built-in memory (not illustrated). For example, the control unit 22 is a microcontroller unit (MCU). The control unit 22 controls the gate drive circuits GD1 to GD6 in accordance with a program stored in advance in the memory.

The smoothing capacitor 23 is a capacitor connected in parallel with the first DC power source 2. Note that the smoothing capacitor 23 is not necessarily disposed inside the power conversion device 20, and may be disposed outside the power conversion device 20.

The power supply circuit 24 is connected to a second DC power source 3. For example, the second DC power source 3 is a battery that outputs a relatively low DC voltage among a plurality of batteries mounted on the electric vehicle. The power supply circuit 24 generates a first power supply voltage Vdd that is used as a power supply voltage of each of the gate drive circuits GD1 to GD6 and a second power supply voltage Vc that is used as a power supply voltage of the control unit 22 from a DC voltage supplied from the second DC power source 3.

The power supply circuit 24 outputs the first power supply voltage Vdd to each of the gate drive circuits GD1 to GD6, and outputs the second power supply voltage Vc to the control unit 22. For example, the power supply circuit 24 is a regulator or a DC-DC converter. Note that the DC voltage output from the first DC power source 2 may be used as the first power supply voltage Vdd that is supplied to each of the gate drive circuits GD1 to GD6.

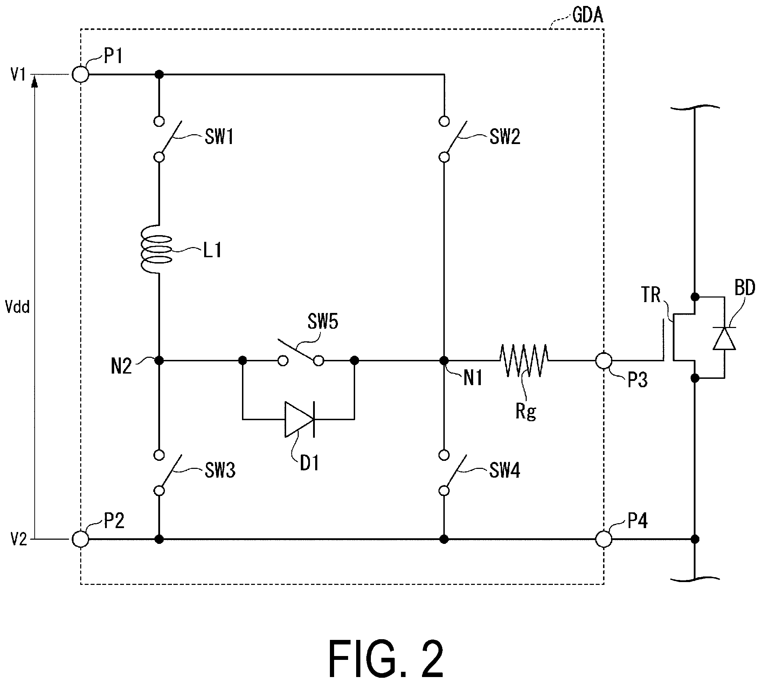

Hereinafter, a configuration of the gate drive circuit GDA in the first embodiment will be described in detail with reference to FIG. 2. FIG. 2 is a circuit configuration diagram of the gate drive circuit GDA. As illustrated in FIG. 2, the gate drive circuit GDA includes a first terminal P1, a second terminal P2, a third terminal P3, a fourth terminal P4, the first switch SW1, the second switch SW2, the third switch SW3, the fourth switch SW4, the fifth switch SW5, an inductor L1, a first diode D1, and a resistor element Rg.

The first terminal P1 is a terminal to which a first potential V1 is applied. The second terminal P2 is a terminal to which a second potential V2 lower than the first potential V1 is applied. The potential difference between the first potential V1 and the second potential V2 is equal to the first power supply voltage Vdd output from the power supply circuit 24. That is, the first power supply voltage Vdd output from the power supply circuit 24 is input to the gate drive circuit GDA via the first terminal P1 and the second terminal P2.

The third terminal P3 is a terminal connected to the gate terminal of the switching element TR corresponding to the gate drive circuit GDA. The fourth terminal P4 is a terminal connected to the source terminal of the switching element TR. For example, when the switching element TR is an IGBT, the fourth terminal P4 is connected to an emitter terminal of the switching element TR. Additionally, the fourth terminal P4 is directly connected to the second terminal P2.

The first switch SW1 is connected in series with the inductor L1. The series circuit in which the first switch SW1 and the inductor L1 are connected in series is connected between the first terminal P1 and a second node N2. The first switch SW1 is connected between the first terminal P1 and the inductor L1. Note that the position of the first switch SW1 and the position of the inductor L1 may be reversed. That is, the inductor L1 may be connected between the first terminal P1 and the first switch SW1.

The second switch SW2 is connected between the first terminal P1 and a first node N1. The third switch SW3 is connected between the second terminal P2 and the second node N2. The fourth switch SW4 is connected between the second terminal P2 and the first node N1. The fifth switch SW5 is connected between the first node N1 and the second node N2. The first diode D1 includes an anode terminal connected to the second node N2 and a cathode terminal connected to the first node N1.

The resistor element Rg is connected between the first node N1 and the third terminal P3. That is, the third terminal P3 is indirectly connected to the first node N1 via the resistor element Rg. The resistor element Rg serves as gate resistance that limits a current flowing through the gate terminal of the switching element TR. The resistor element Rg may be connected between the gate terminal of the switching element TR and the third terminal P3. In this case, the third terminal P3 is directly connected to the first node N1. In this way, the third terminal P3 is directly or indirectly connected to the first node N1.

In the present embodiment, each of the first switch SW1, the second switch SW2, the third switch SW3, the fourth switch SW4, and the fifth switch SW5 may be constituted by a single switching element such as a MOS-FET, or may be constituted by a switching element and a resistor element connected in series. When each switch is constituted by a single switching element, the switching element itself may have on-resistance.

The gate drive circuit GDA includes a charging circuit that charges input capacitance of the switching element TR by applying a gate voltage to the gate terminal of the switching element TR, and a discharging circuit that discharges the input capacitance of the switching element TR. The charging circuit includes the first switch SW1, the second switch SW2, the third switch SW3, the inductor L1, and the first diode D1 among the above-described constituent elements. The discharging circuit includes the third switch SW3, the fourth switch SW4, and the fifth switch SW5 among the above-described constituent elements.

The charging circuit includes a first charging path including a series circuit in which the first switch SW1 and the inductor L1 are connected in series between the first terminal P1 and the first node N1, and a second charging path in which the second switch SW2 is connected between the first terminal P1 and the first node N1. In the present embodiment, the first charging path includes not only the first switch SW1 and the inductor L1 connected in series between the first terminal P1 and the second node N2, but also the first diode D1 connected between the first node N1 and the second node N2. Although details will be described below, the charging circuit performs charging through the second charging path and then performs charging through the first charging path when the switching element TR is turned on.

The discharging circuit is configured to switch a path through which a discharge current flows from the gate terminal of the switching element TR between a first discharging path and a second discharging path having a resistance value higher than that of the first discharging path. The discharging circuit performs discharging through the first discharging path and then performs discharging through the second discharging path when the switching element TR is turned off. The configuration and operation of such a discharging circuit will be described below.

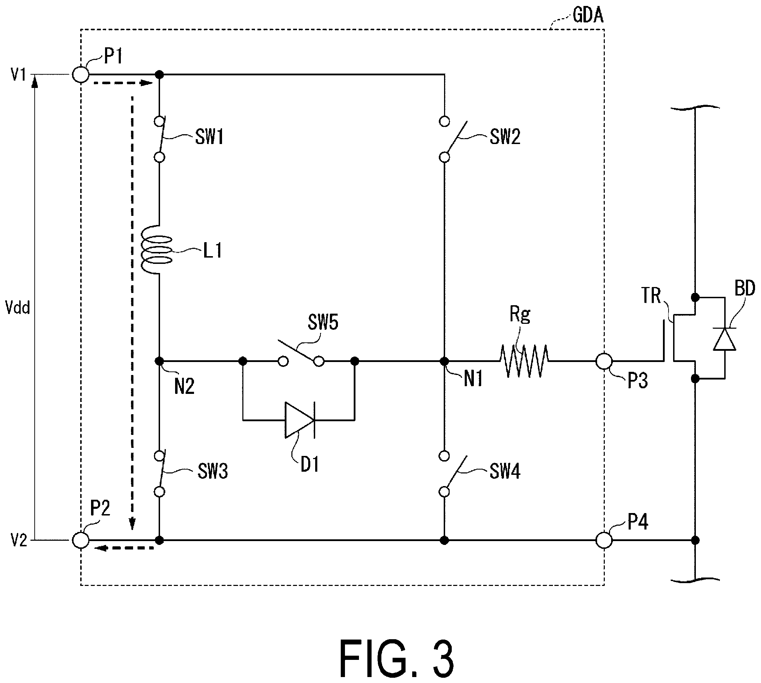

Hereinafter, the operation of the gate drive circuit GDA in turning on the switching element TR will be described with reference to FIG. 3 to FIG. 7.

FIG. 3 is a first diagram illustrating a path of a current flowing through the gate drive circuit GDA when the switching element TR is turned on. As illustrated in FIG. 3, when the switching element TR is turned on, the control unit 22 turns on the first switch SW1 and the third switch SW3 and turns off the second switch SW2 and the fifth switch SW5 at a first timing. As a result, after the first timing, a current flows through a path indicated by dashed arrows in FIG. 3.

That is, after the first timing, a current flows through the first terminal P1, the first switch SW1, the inductor L1, the second node N2, the third switch SW3, and the second terminal P2 in this order. Thus, energy is accumulated in the inductor L1 after the first timing.

Note that as illustrated in FIG. 3, the fourth switch SW4 may be turned off at the first timing, but it is desirable that the fourth switch SW4 be in an on state at the first timing in order to avoid unstable gate voltage of the switching element TR.

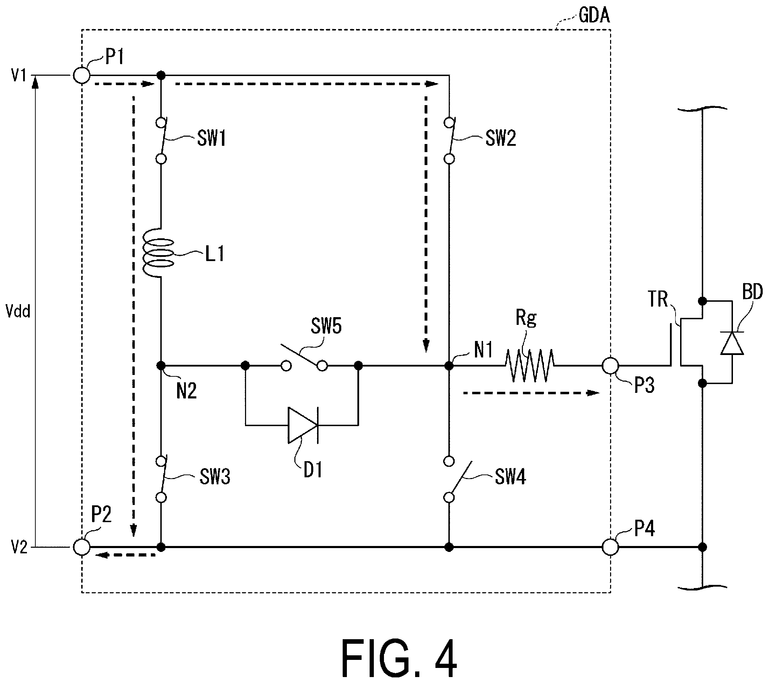

FIG. 4 is a second diagram illustrating a path of a current flowing through the gate drive circuit GDA when the switching element TR is turned on. As illustrated in FIG. 4, the control unit 22 turns on the second switch SW2 and turns off the fourth switch SW4 at a second timing after the first timing. As a result, after the second timing, a current flows through a path indicated by dashed arrows in FIG. 4.

That is, after the second timing, a current flows through the first terminal P1, the first switch SW1, the inductor L1, the second node N2, the third switch SW3, and the second terminal P2 in this order, and a current flows through the first terminal P1, the second switch SW2, the first node N1, and the resistor element Rg in this order, and the current flows into the gate terminal of the switching element TR via the third terminal P3. Thus, after the second timing, input capacitance of the switching element TR is charged with the first power supply voltage Vdd, and at the same time, energy is accumulated in the inductor L1.

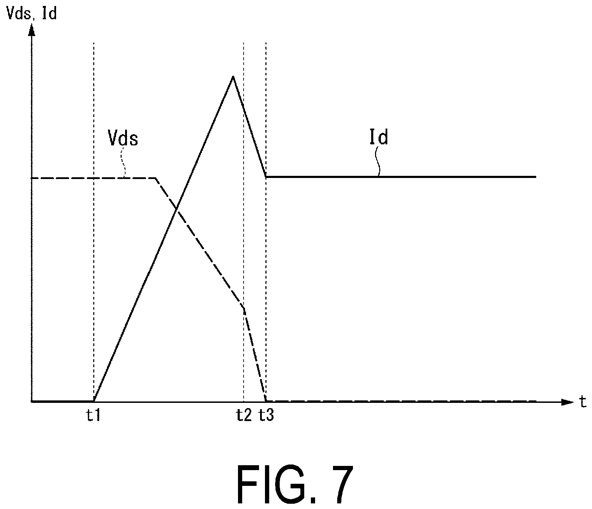

FIG. 7 is a diagram illustrating an example of waveforms of a drain-source voltage Vds and a drain current Id of the switching element TR when the switching element TR is turned on. In FIG. 7, a time t1 corresponds to the second timing. As illustrated in FIG. 7, after the time t1 corresponding to the second timing, the input capacitance of the switching element TR is charged with the first power supply voltage Vdd, and thus on-resistance of the switching element TR decreases over time, and the drain current Id increases over time.

Note that in the above description, the example has been described in which the control unit 22 turns on the second switch SW2 and turns off the fourth switch SW4 at the second timing, but the present invention is not limited thereto. The control unit 22 may turn on the first switch SW1, the second switch SW2, and the third switch SW3 and turn off the fourth switch SW4 and the fifth switch SW5 at the first timing. In this case, after the first timing, the input capacitance of the switching element TR is charged with the first power supply voltage Vdd, and at the same time, energy is accumulated in the inductor L1.

Alternatively, the control unit 22 may turn on the second switch SW2 and turn off the first switch SW1, the third switch SW3, the fourth switch SW4, and the fifth switch SW5 before the first timing, and turn on the first switch SW1 and the third switch SW3 at the first timing. In this case, the input capacitance of the switching element TR is charged with the first power supply voltage Vdd from a time before the first timing, and the input capacitance of the switching element TR is charged with the first power supply voltage Vdd after the first timing, and at the same time, energy is accumulated in the inductor L1.

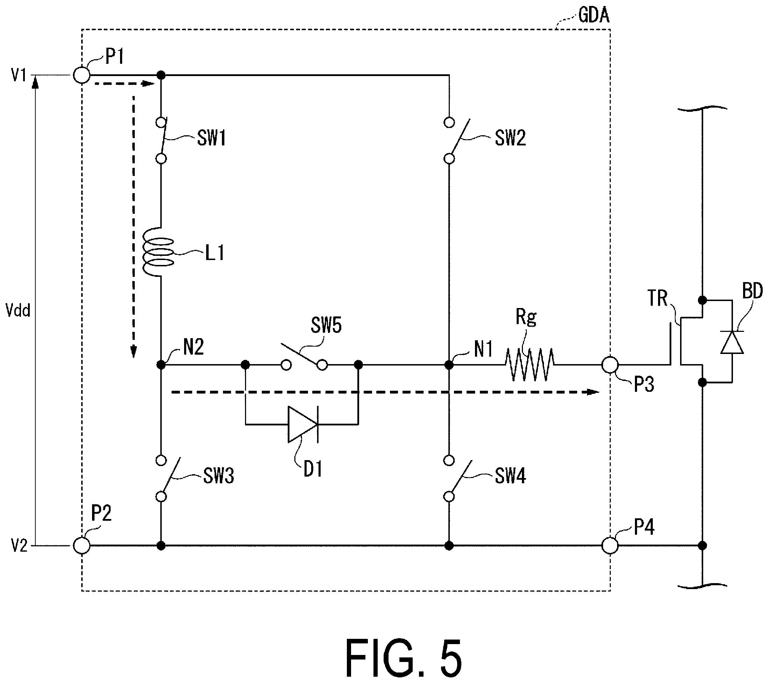

FIG. 5 is a third diagram illustrating a path of a current flowing through the gate drive circuit GDA when the switching element TR is turned on. As illustrated in FIG. 5, the control unit 22 turns off the second switch SW2 and the third switch SW3 at a third timing after the second timing. As a result, after the third timing, a current flows through a path indicated by dashed arrows in FIG. 5.

That is, after the third timing, a current flows through the first terminal P1, the first switch SW1, the inductor L1, the second node N2, the first diode D1, the first node N1, and the resistor element Rg in this order, and the current flows into the gate terminal of the switching element TR via the third terminal P3. Thus, after the third timing, the discharge of the energy stored in the inductor L1 as a current causes the potential of the first node N1 to become higher than the first power supply voltage Vdd, and causes the current flowing into the gate terminal of the switching element TR to increase. As a result, after the third timing, the input capacitance of the switching element TR is charged with a voltage higher than the first power supply voltage Vdd, and thus, the charging speed of the input capacitance of the switching element TR increases.

In FIG. 7, a time t2 corresponds to the third timing. As illustrated in FIG. 7, the third timing (time t2) is a time point after the time point at which the peak of a reverse recovery current appears in the drain current Id. In other words, the third timing is set in advance as a time point after the time point at which the peak of a reverse recovery current appears in the drain current Id, and the control unit 22 turns off the second switch SW2 and the third switch SW3 at the third timing set in advance in this manner. Note that the third timing is appropriately set according to a drain current value when the switching element TR is in the on state and a drain-source voltage when the switching element TR is in the off state.

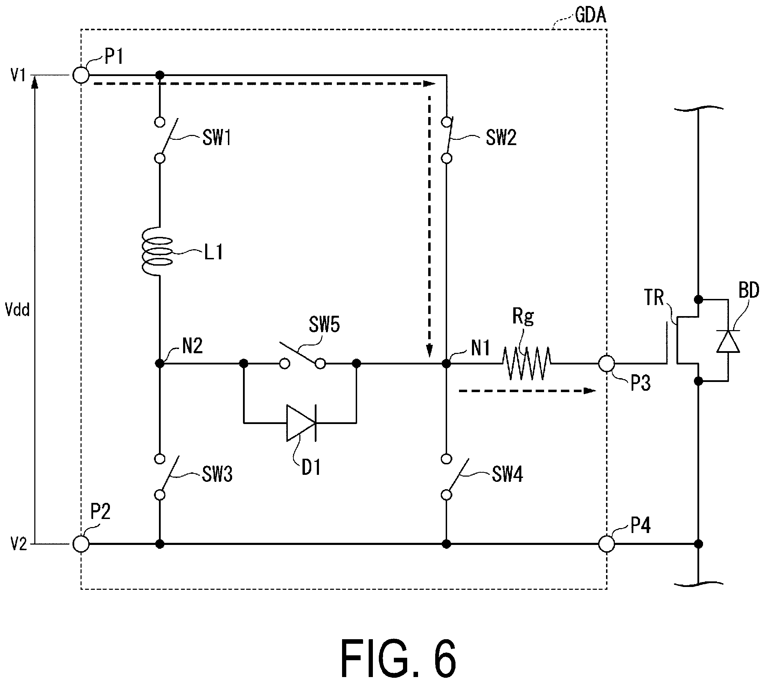

FIG. 6 is a fourth diagram illustrating a path of a current flowing through the gate drive circuit GDA when the switching element TR is turned on. As illustrated in FIG. 6, the control unit 22 turns on the second switch SW2 at a timing immediately before or after all the energy stored in the inductor L1 is released as a current after the third timing. As a result, after all the energy stored in the inductor L1 is discharged as a current, the current flows through a path indicated by dashed arrows in FIG. 6.

That is, after all the energy stored in the inductor L1 is discharged as a current, the current flows through the first terminal P1, the second switch SW2, the first node N1, and the resistor element Rg in this order, and flows into the gate terminal of the switching element TR via the third terminal P3. Thus, after all the energy stored in the inductor L1 is discharged as a current, the input capacitance of the switching element TR is charged again with the first power supply voltage Vdd.

Note that although the first switch SW1 is in the off state in FIG. 6, the first switch SW1 may also be turned on when the second switch SW2 is turned on.

In FIG. 7, a time t3 corresponds to a time point immediately before or after all the energy stored in the inductor L1 is released as a current. As illustrated in FIG. 7, for example, when the switching element TR is completely turned on at the time t3, the drain-source voltage Vds becomes substantially 0 V at the time t3, and the drain current Id is held at a fixed value after the time t3.

As described above, when the switching element TR is turned on, the gate drive circuit GDA is controlled such that the charging speed of the input capacitance of the switching element TR increases from the third timing that is a time point after the time point at which the peak of the reverse recovery current appears in the drain current Id, and thus it is possible to reduce the switching loss at the time of the turning-on operation while suppressing the generation of noise and surge due to the reverse recovery current. In particular, since the charging speed increases in the second half of the turning-on operation, the overdrive voltage can be quickly applied to the gate terminal of the switching element TR. As a result, the conduction loss in the second half of the turning-on operation can be suppressed.

As understood from the above description, the charging circuit included in the gate drive circuit GDA includes the first charging path including the series circuit in which the first switch SW1 and the inductor L1 are connected in series between the first terminal P1 and the first node N1, and the second charging path in which the second switch SW2 is connected between the first terminal P1 and the first node N1. It will be understood from the above description that the charging circuit performs charging through the second charging path and then performs charging through the first charging path when the switching element TR is turned on.

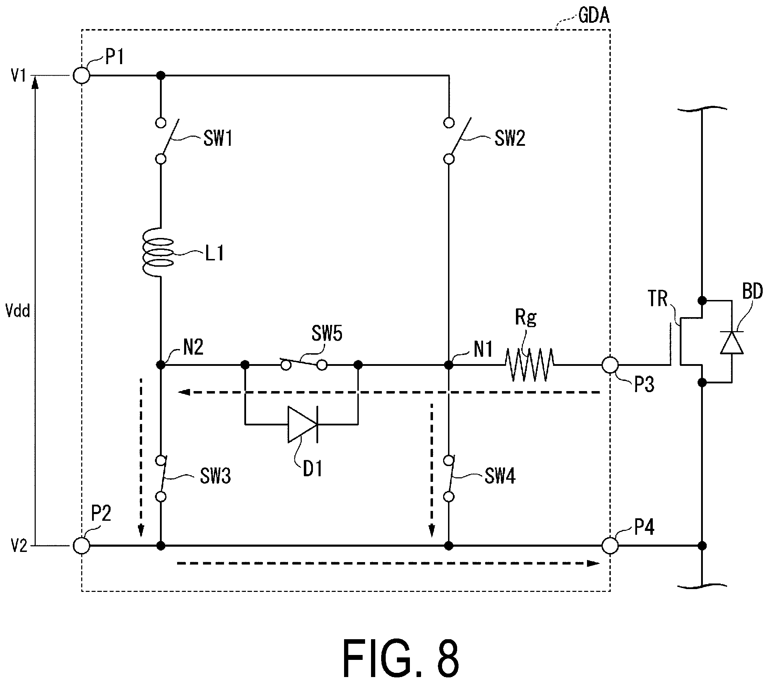

Next, an operation of the gate drive circuit GDA at the time of turning off the switching element TR will be described with reference to FIG. 8 to FIG. 10.

FIG. 8 is a first diagram illustrating a path of a current flowing through the gate drive circuit GDA when the switching element TR is turned off. When the switching element TR is turned off, the control unit 22 turns off the first switch SW1 and the second switch SW2 and turns on the third switch SW3, the fourth switch SW4, and the fifth switch SW5 at a fourth timing. As a result, after the fourth timing, a current flows through a path indicated by dashed arrows in FIG. 8.

That is, after the fourth timing, a current flows through the third terminal P3, the resistor element Rg, the first node N1, and the fourth switch SW4 in this order, and at the same time, a current flows through the first node N1, the fifth switch SW5, the second node N2, and the third switch SW3 in this order, and the currents are caused to flow into a wiring line connected to the source terminal of the switching element TR via the fourth terminal P4.

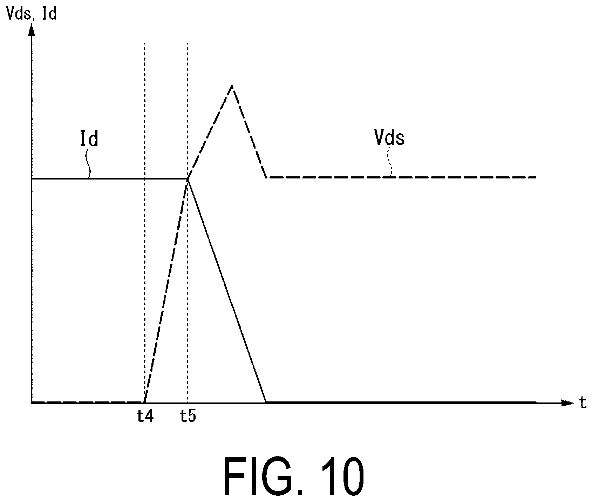

FIG. 10 is a diagram illustrating an example of waveforms of the drain-source voltage Vds and the drain current Id of the switching element TR when the switching element TR is turned off. In FIG. 10, a time t4 corresponds to the fourth timing. As illustrated in FIG. 10, after the time t4 corresponding to the fourth timing, a discharge current flows through the path illustrated in FIG. 8, and thus, on-resistance of the switching element TR increases over time, so that the drain-source voltage Vds increases over time.

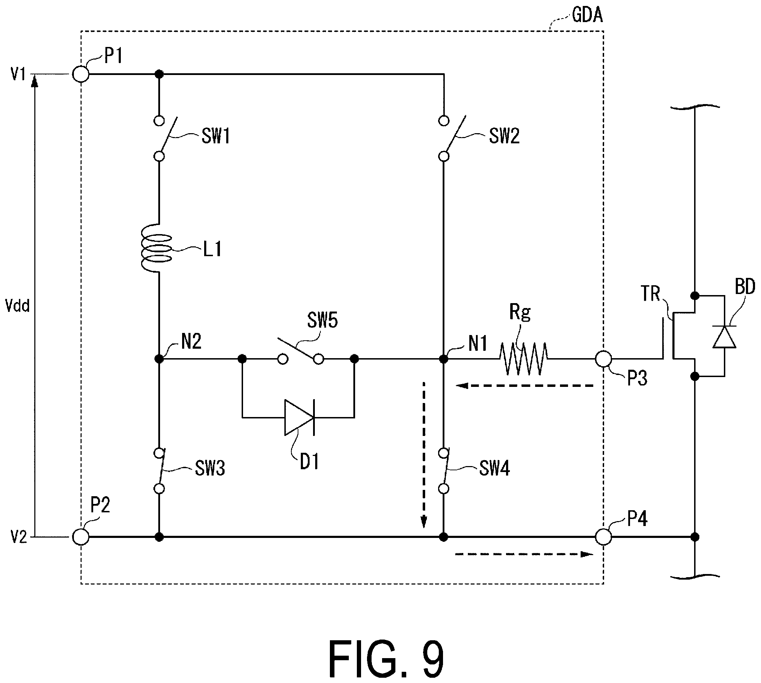

FIG. 9 is a second diagram illustrating a path of a current flowing through the gate drive circuit GDA when the switching element TR is turned off. The control unit 22 turns off at least one of the third switch SW3 and the fifth switch SW5 at a fifth timing after the fourth timing. As a result, after the fifth timing, a current flows through a path indicated by dashed arrows in FIG. 9. Note that FIG. 9 illustrates an example in which only the fifth switch SW5 is turned off.

That is, after the fifth timing, a current flows through the third terminal P3, the resistor element Rg, the first node N1, and the fourth switch SW4 in this order, and the current is caused to flow into a wiring line connected to the source terminal of the switching element TR via the fourth terminal P4.

In FIG. 10, a time t5 corresponds to the fifth timing. As illustrated in FIG. 10, the fifth timing (time t5) is a time point before a time point at which the peak of a surge voltage appears in the drain-source voltage Vds. In other words, the fifth timing is set in advance as a time point before a time point at which the peak of a surge voltage appears in the drain-source voltage Vds, and the control unit 22 turns off at least one of the third switch SW3 and the fifth switch SW5 at the fifth timing set in advance in this manner. Note that the fifth timing is appropriately set according to a drain current value when the switching element TR is in the on state and a drain-source voltage when the switching element TR is in the off state.

As described above, when the switching element TR is turned off, the input capacitance of the switching element TR is discharged through two discharging paths, that is, a discharging path including the third switch SW3 and the fifth switch SW5 and a discharging path including the fourth switch SW4, in the initial stage of the turning-off operation. This increases the discharge speed of the input capacitance of the switching element TR, thereby reducing the switching loss at the time of turning off. In addition, the input capacitance of the switching element TR is discharged only through the discharging path including the fourth switch SW4 from the fifth timing, which is a time point before a time point at which the peak of a surge voltage appears in the drain-source voltage Vds. This reduces the discharge speed before the peak of the surge voltage appears in the drain-source voltage Vds, thereby reducing the height of the peak of the surge voltage. As a result, noise and surge generated at the time of turning off can be suppressed.

As understood from the above description, the discharging circuit included in the gate drive circuit GDA has a configuration in which a path through which a discharge current flows from the gate terminal of the switching element TR is switched between the first discharging path and the second discharging path having a resistance value higher than that of the first discharging path. The first discharging path includes two discharging paths, that is, a discharging path including the third switch SW3 and the fifth switch SW5, and a discharging path including the fourth switch SW4. The second discharging path is a discharging path including the fourth switch SW4. It will be understood from the above description that the discharging circuit performs discharging through the first discharging path and then performs discharging through the second discharging path when the switching element TR is turned off.

As described above, according to the gate drive circuit GDA of the first embodiment, it is possible to achieve both reduction of the switching loss of the switching element TR to be driven and suppression of the noise and surge generated at the time of switching.

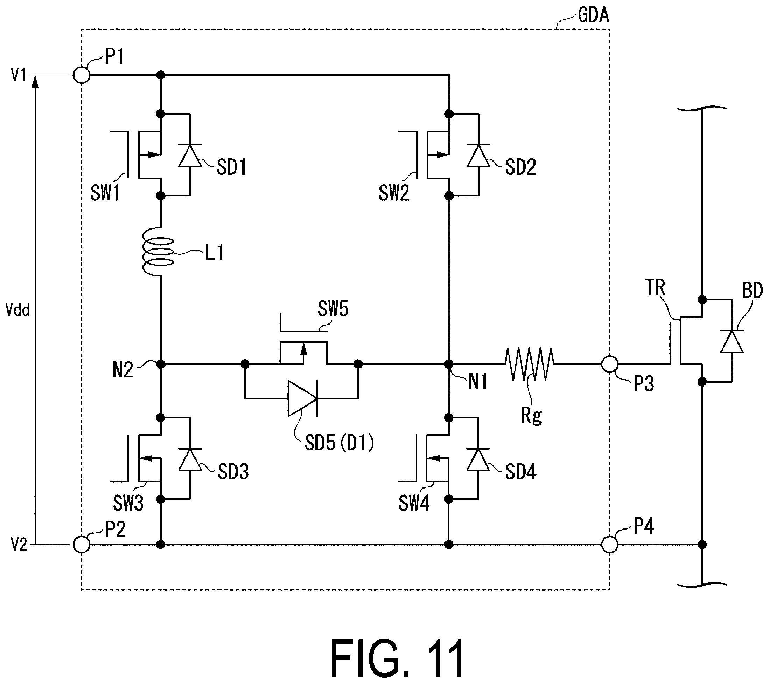

FIG. 11 is a diagram illustrating a specific example of the gate drive circuit GDA. As illustrated in FIG. 11, in the gate drive circuit GDA, the first switch SW1 and the second switch SW2 are preferably P-channel MOS-FETs, and the third switch SW3, the fourth switch SW4, and the fifth switch SW5 are preferably N-channel MOS-FETs.

The first switch SW1 includes a first body diode SD1 that is parasitic between the drain and the source of the first switch SW1, that is, a P-channel MOS-FET. As an equivalent circuit, an anode terminal of the first body diode SD1 is connected to the drain terminal of the first switch SW1, and a cathode terminal of the first body diode SD1 is connected to the source terminal of the first switch SW1.

The source terminal of the first switch SW1 is connected to the first terminal P1. The drain terminal of the first switch SW1 is connected to the inductor L1 and is connected to the second node N2 via the inductor L1. The gate terminal of the first switch SW1 is connected to the control unit 22. One control signal output from the control unit 22 is input to the gate terminal of the first switch SW1.

The second switch SW2 includes a second body diode SW2 that is parasitic between the drain and the source of the second switch SD2, that is, a P-channel MOS-FET. As an equivalent circuit, an anode terminal of the second body diode SD2 is connected to the drain terminal of the second switch SW2, and a cathode terminal of the second body diode SD2 is connected to the source terminal of the second switch SW2.

The source terminal of the second switch SW2 is connected to the first terminal P1. The drain terminal of the second switch SW2 is connected to the first node N1. The gate terminal of the second switch SW2 is connected to the control unit 22. One control signal output from the control unit 22 is input to the gate terminal of the second switch SW2.

The third switch SW3 includes a third body diode SW3 that is parasitic between the drain and the source of the third switch SD3, that is, an N-channel MOS-FET. As an equivalent circuit, an anode terminal of the third body diode SD3 is connected to the source terminal of the third switch SW3, and a cathode terminal of the third body diode SD3 is connected to the drain terminal of the third switch SW3.

The source terminal of the third switch SW3 is connected to the second terminal P2. The drain terminal of the third switch SW3 is connected to the second node N2. The gate terminal of the third switch SW3 is connected to the control unit 22. One control signal output from the control unit 22 is input to the gate terminal of the third switch SW3.

The fourth switch SW4 includes a fourth body diode SD4 that is parasitic between the drain and the source of the fourth switch SW4, that is, an N-channel MOS-FET. As an equivalent circuit, an anode terminal of the fourth body diode SD4 is connected to the source terminal of the fourth switch SW4, and a cathode terminal of the fourth body diode SD4 is connected to the drain terminal of the fourth switch SW4.

The source terminal of the fourth switch SW4 is connected to the second terminal P2. The drain terminal of the fourth switch SW4 is connected to the first node N1. The gate terminal of the fourth switch SW4 is connected to the control unit 22. One control signal output from the control unit 22 is input to the gate terminal of the fourth switch SW4.

The fifth switch SW5 includes a fifth body diode SW5 that is parasitic between the drain and the source of the fifth switch SD5, that is, an N-channel MOS-FET. As an equivalent circuit, an anode terminal of the fifth body diode SD5 is connected to the source terminal of the fifth switch SW5, and a cathode terminal of the fifth body diode SD5 is connected to the drain terminal of the fifth switch SW5.

The source terminal of the fifth switch SW5 is connected to the second node N2. The drain terminal of the fifth switch SW5 is connected to the first node N1. The gate terminal of the fifth switch SW5 is connected to the control unit 22. One control signal output from the control unit 22 is input to the gate terminal of the fifth switch SW5. As can be understood from comparison between FIG. 2 and FIG. 11, the fifth body diode SD5 parasitic on the fifth switch SW5 can be used as the first diode D1.

When the fifth switch SW5 is turned on at the fourth timing, the third switch SW3 is also in the on state, and thus the source potential of the fifth switch SW5 matches the negative potential of the first power supply voltage Vdd, that is, the second potential V2. Thus, when the fifth switch SW5 is turned on at the fourth timing, the first power supply voltage Vdd or a voltage obtained by dividing the first power supply voltage Vdd may be applied to the gate terminal of the fifth switch SW5.

When the first switch SW1 and the second switch SW2 are turned on, the second potential V2 or a potential between the first potential V1 and the second potential V2 may be applied to the respective gate terminals. When the third switch SW3 and the fourth switch SW4 are turned on, the first potential V1 or a potential between the first potential V1 and the second potential V2 may be applied to the respective gate terminals. That is, the first switch SW1, the second switch SW2, the third switch SW3, and the fourth switch SW4 can be driven within a voltage range between the first potential V1 and the second potential V2.

### Second Embodiment

Next, a second embodiment of the present invention will be described. The second embodiment is different from the first embodiment in that the power conversion device 20 includes a gate drive circuit GDB having a configuration different from that of the gate drive circuit GDA. That is, in the second embodiment, the configuration of the power conversion device 20 other than the gate drive circuit GDB and the configuration of the motor unit 1 are the same as those in the first embodiment, and thus only the configuration and operation of the gate drive circuit GDB will be described below.

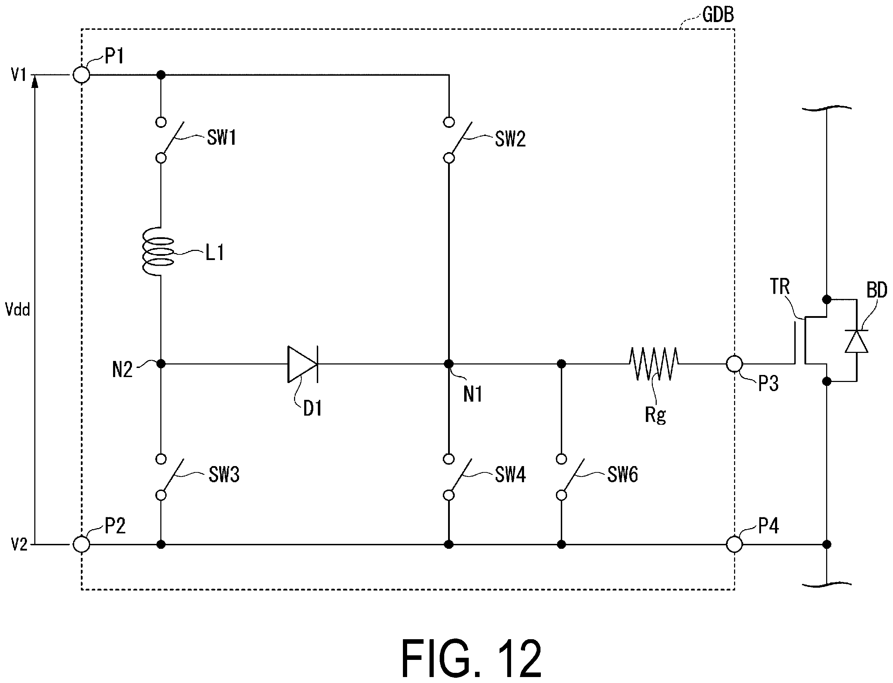

FIG. 12 is a circuit configuration diagram of the gate drive circuit GDB in the second embodiment. As can be understood from comparison between FIG. 12 and FIG. 2, the gate drive circuit GDB in the second embodiment is different from the gate drive circuit GDA in the first embodiment in that the gate drive circuit GDB includes a sixth switch SW6 instead of the fifth switch SW5.

In the gate drive circuit GDB, only the first diode D1 is connected between the first node N1 and the second node N2. The sixth switch SW6 is connected between the second terminal P2 and the first node N1. In other words, the sixth switch SW6 is connected in parallel with the fourth switch SW4. To be more specific, one end of the sixth switch SW6 is connected to the second terminal P2, and the other end of the sixth switch SW6 is connected to the first node N1.

The charging circuit of the gate drive circuit GDB includes the first switch SW1, the second switch SW2, the third switch SW3, the inductor L1, and the first diode D1. The discharging circuit of the gate drive circuit GDB includes the fourth switch SW4 and the sixth switch SW6.

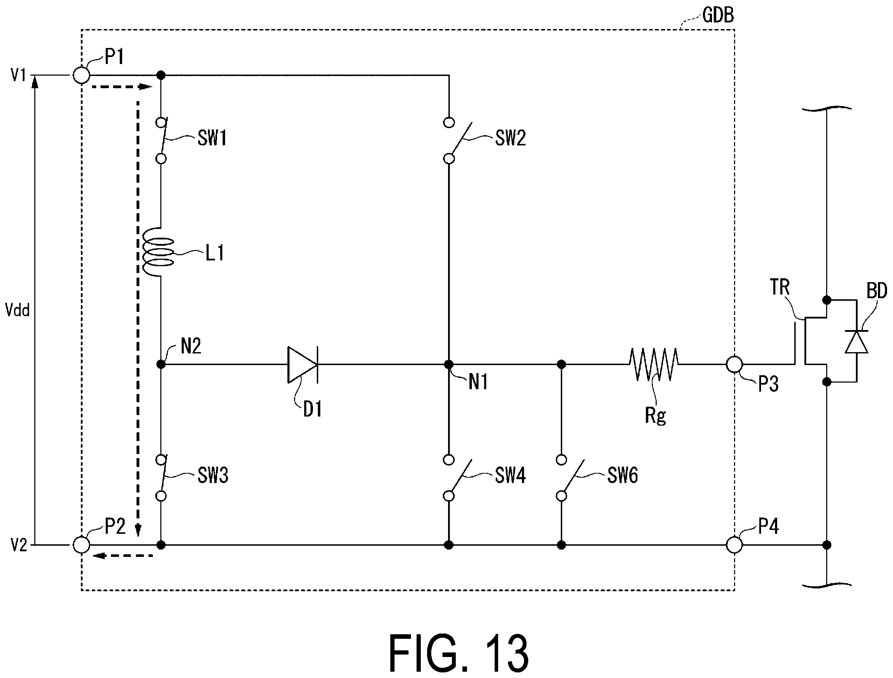

Hereinafter, the operation of the gate drive circuit GDB in turning on the switching element TR will be described with reference to FIG. 13 to FIG. 16.

FIG. 13 is a first diagram illustrating a path of a current flowing through the gate drive circuit GDB when the switching element TR is turned on. As illustrated in FIG. 13, when the switching element TR is turned on, the control unit 22 turns on the first switch SW1 and the third switch SW3 and turns off the second switch SW2 at the first timing. As a result, after the first timing, a current flows through a path indicated by dashed arrows in FIG. 13.

That is, after the first timing, a current flows through the first terminal P1, the first switch SW1, the inductor L1, the second node N2, the third switch SW3, and the second terminal P2 in this order. Thus, energy is accumulated in the inductor L1 after the first timing.

Note that as illustrated in FIG. 13, the fourth switch SW4 and the sixth switch SW6 may be turned off at the first timing, but it is desirable that at least one of the fourth switch SW4 and the sixth switch SW6 be in the on state at the first timing in order to avoid the unstable gate voltage of the switching element TR.

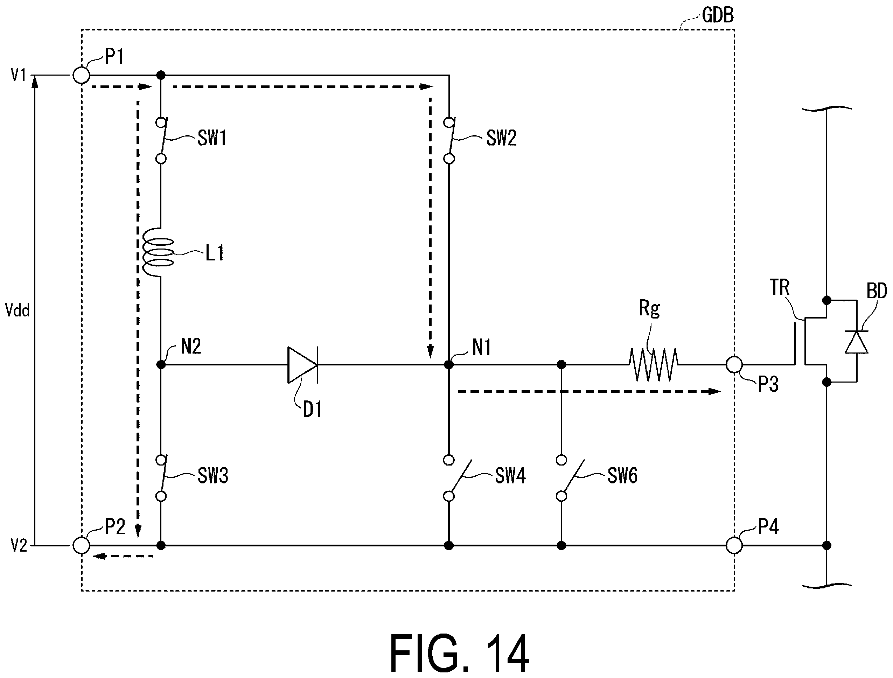

FIG. 14 is a second diagram illustrating a path of a current flowing through the gate drive circuit GDB when the switching element TR is turned on. As illustrated in FIG. 14, the control unit 22 turns on the second switch SW2 and turns off the fourth switch SW4 and the sixth switch SW6 at the second timing after the first timing. As a result, after the second timing, a current flows through a path indicated by dashed arrows in FIG. 14.

That is, after the second timing, a current flows through the first terminal P1, the first switch SW1, the inductor L1, the second node N2, the third switch SW3, and the second terminal P2 in this order, and a current flows through the first terminal P1, the second switch SW2, the first node N1, and the resistor element Rg in this order, and the current flows into the gate terminal of the switching element TR via the third terminal P3. Thus, after the second timing, input capacitance of the switching element TR is charged with the first power supply voltage Vdd, and at the same time, energy is accumulated in the inductor L1.

Note that in the above description, the example has been described in which the control unit 22 turns on the second switch SW2 and turns off the fourth switch SW4 and the sixth switch SW6 at the second timing, but the present invention is not limited thereto. The control unit 22 may turn on the first switch SW1, the second switch SW2, and the third switch SW3 and turn off the fourth switch SW4 and the sixth switch SW6 at the first timing. In this case, after the first timing, the input capacitance of the switching element TR is charged with the first power supply voltage Vdd, and at the same time, energy is accumulated in the inductor L1.

Alternatively, the control unit 22 may turn on the second switch SW2 and turn off the first switch SW1, the third switch SW3, the fourth switch SW4, and the sixth switch SW6 before the first timing, and turn on the first switch SW1 and the third switch SW3 at the first timing. In this case, the input capacitance of the switching element TR is charged with the first power supply voltage Vdd from a time before the first timing, and after the first timing, the input capacitance of the switching element TR is charged with the first power supply voltage Vdd and at the same time, energy is accumulated in the inductor L1.

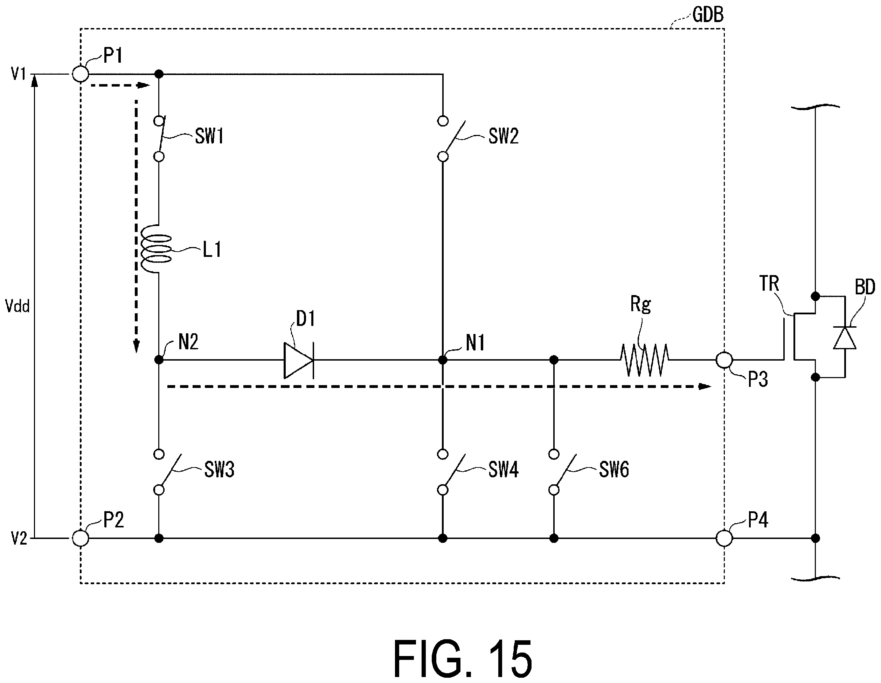

FIG. 15 is a third diagram illustrating a path of a current flowing through the gate drive circuit GDB when the switching element TR is turned on. As illustrated in FIG. 15, the control unit 22 turns off the second switch SW2 and the third switch SW3 at the third timing after the second timing. As a result, after the third timing, a current flows through a path indicated by dashed arrows in FIG. 15.

That is, after the third timing, a current flows through the first terminal P1, the first switch SW1, the inductor L1, the second node N2, the first diode D1, the first node N1, and the resistor element Rg in this order, and the current flows into the gate terminal of the switching element TR via the third terminal P3. Thus, after the third timing, the discharge of the energy stored in the inductor L1 as a current causes the potential of the first node N1 to become higher than the first power supply voltage Vdd, and causes the current flowing into the gate terminal of the switching element TR to increase. As a result, after the third timing, the input capacitance of the switching element TR is charged with a voltage higher than the first power supply voltage Vdd, and thus, the charging speed of the input capacitance of the switching element TR increases.

Similarly to the first embodiment, in the second embodiment, the third timing is set in advance as a time point after a time point at which the peak of a reverse recovery current appears in the drain current Id, and the control unit 22 turns off the second switch SW2 and the third switch SW3 at the third timing set in advance in this manner. Note that the third timing is appropriately set according to a drain current value when the switching element TR is in the on state and a drain-source voltage when the switching element TR is in the off state.

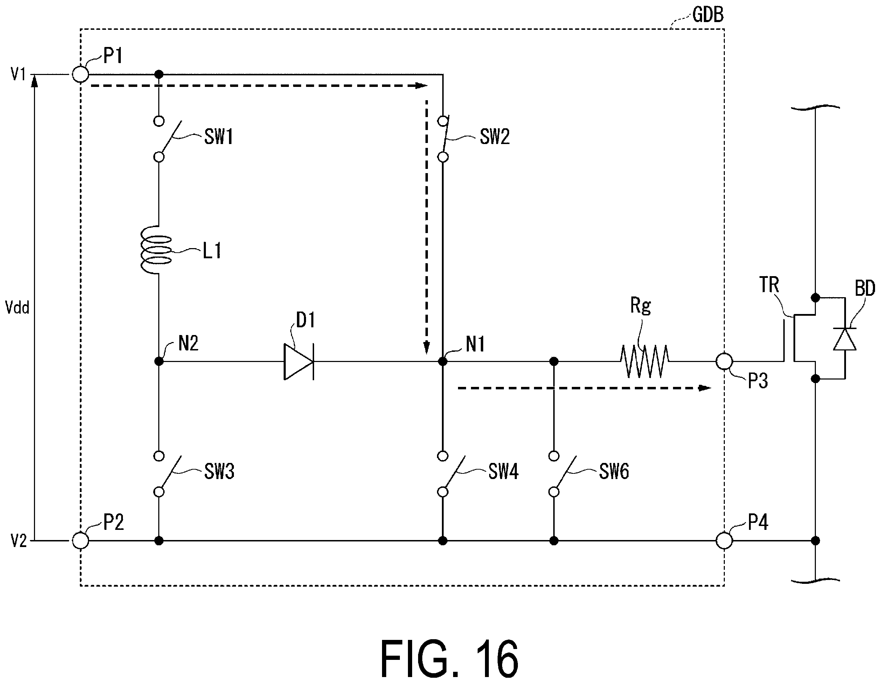

FIG. 16 is a fourth diagram illustrating a path of a current flowing through the gate drive circuit GDB when the switching element TR is turned on. As illustrated in FIG. 16, the control unit 22 turns on the second switch SW2 at a timing immediately before or after all the energy stored in the inductor L1 is released as a current after the third timing. As a result, after all the energy stored in the inductor L1 is discharged as a current, the current flows through a path indicated by dashed arrows in FIG. 16.

That is, after all the energy stored in the inductor L1 is discharged as a current, the current flows through the first terminal P1, the second switch SW2, the first node N1, and the resistor element Rg in this order, and flows into the gate terminal of the switching element TR via the third terminal P3. Thus, after all the energy stored in the inductor L1 is discharged as a current, the input capacitance of the switching element TR is charged again with the first power supply voltage Vdd.

Note that although the first switch SW1 is in the off state in FIG. 16, the first switch SW1 may also be turned on when the second switch SW2 is turned on.

As described above, when the switching element TR is turned on, the gate drive circuit GDB is controlled such that the charging speed of the input capacitance of the switching element TR increases from the third timing, which is a time point after a time point at which the peak of a reverse recovery current appears in the drain current Id, and thus, it is possible to reduce the switching loss at the time of turning on while suppressing the occurrence of noise and surge due to the reverse recovery current. In particular, since the charging speed increases in the second half of the turning-on operation, the overdrive voltage can be quickly applied to the gate terminal of the switching element TR. As a result, the conduction loss in the second half of the turning-on operation can be suppressed.

As understood from the above description, the charging circuit included in the gate drive circuit GDB includes the first charging path including the series circuit in which the first switch SW1 and the inductor L1 are connected in series between the first terminal P1 and the first node N1, and the second charging path in which the second switch SW2 is connected between the first terminal P1 and the first node N1. It will be understood from the above description that the charging circuit performs charging through the second charging path and then performs charging through the first charging path when the switching element TR is turned on.

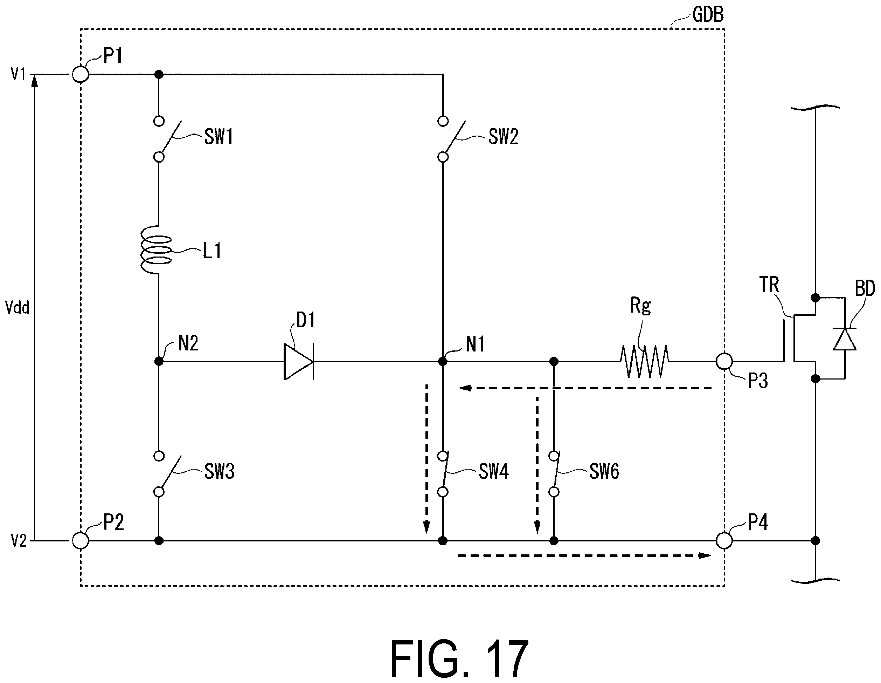

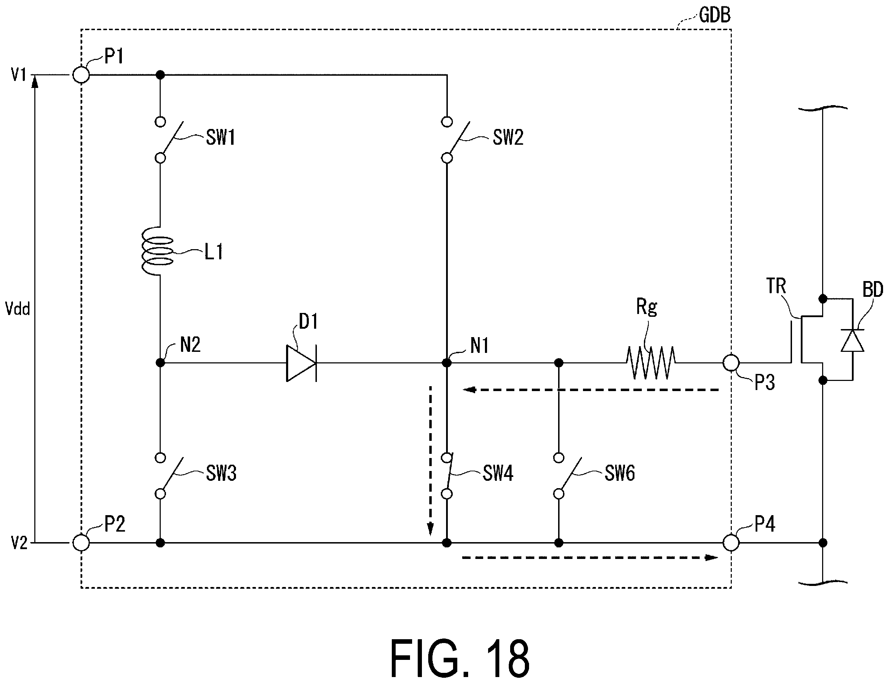

Next, the operation of the gate drive circuit GDB at the time of turning off the switching element TR will be described with reference to FIG. 17 and FIG. 18.

FIG. 17 is a first diagram illustrating a path of a current flowing through the gate drive circuit GDB when the switching element TR is turned off. When the switching element TR is turned off, the control unit 22 turns off the first switch SW1 and the second switch SW2 and turns on the fourth switch SW4 and the sixth switch SW6 at the fourth timing. As a result, after the fourth timing, a current flows through a path indicated by dashed arrows in FIG. 17.

That is, after the fourth timing, a current flows through the third terminal P3, the resistor element Rg, the first node N1, and the fourth switch SW4 in this order, and at the same time, a current flows through the third terminal P3, the resistor element Rg, and the sixth switch SW6 in this order, and the currents are caused to flow into a wiring line connected to the source terminal of the switching element TR via the fourth terminal P4.

Note that although the third switch SW3 is turned off in FIG. 17, the third switch SW3 may be turned on at the fourth timing.

FIG. 18 is a second diagram illustrating a path of a current flowing through the gate drive circuit GDB when the switching element TR is turned off. The control unit 22 turns off the sixth switch SW6 at the fifth timing after the fourth timing. As a result, after the fifth timing, a current flows through a path indicated by dashed arrows in FIG. 18.

That is, after the fifth timing, a current flows through the third terminal P3, the resistor element Rg, the first node N1, and the fourth switch SW4 in this order, and the current is caused to flow into a wiring line connected to the source terminal of the switching element TR via the fourth terminal P4.

Similarly to the first embodiment, in the second embodiment, the fifth timing is set in advance as a time point before a time point at which the peak of a surge voltage appears in the drain-source voltage Vds, and the control unit 22 turns off the sixth switch SW6 at the fifth timing set in advance in this manner. Note that the fifth timing is appropriately set according to a drain current value when the switching element TR is in the on state and a drain-source voltage when the switching element TR is in the off state.

As described above, when the switching element TR is turned off, the input capacitance of the switching element TR is discharged through two discharging paths, that is, a discharging path including the fourth switch SW4 and a discharging path including the sixth switch SW6, in the initial stage of the turning-off operation. This increases the discharge speed of the input capacitance of the switching element TR, thereby reducing the switching loss at the time of turning off. In addition, the input capacitance of the switching element TR is discharged only through the discharging path including the fourth switch SW4 from the fifth timing, which is a time point before a time point at which the peak of a surge voltage appears in the drain-source voltage Vds. This reduces the discharge speed before the peak of the surge voltage appears in the drain-source voltage Vds, thereby reducing the height of the peak of the surge voltage. As a result, noise and surge generated at the time of turning off can be suppressed.

As understood from the above description, the discharging circuit included in the gate drive circuit GDB has a configuration in which a path through which a discharge current flows from the gate terminal of the switching element TR is switched between the first discharging path and the second discharging path having a resistance value higher than that of the first discharging path. The first discharging path includes two discharging paths, that is, a discharging path including the fourth switch SW4 and a discharging path including the sixth switch SW6. The second discharging path is a discharging path including the fourth switch SW4. It will be understood from the above description that the discharging circuit performs discharging through the first discharging path and then performs discharging through the second discharging path when the switching element TR is turned off.

As described above, similarly to the gate drive circuit GDA according to the first embodiment, it is possible to achieve both reduction of the switching loss of the switching element TR to be driven and suppression of the noise and surge generated at the time of switching according to the gate drive circuit GDB of the second embodiment.

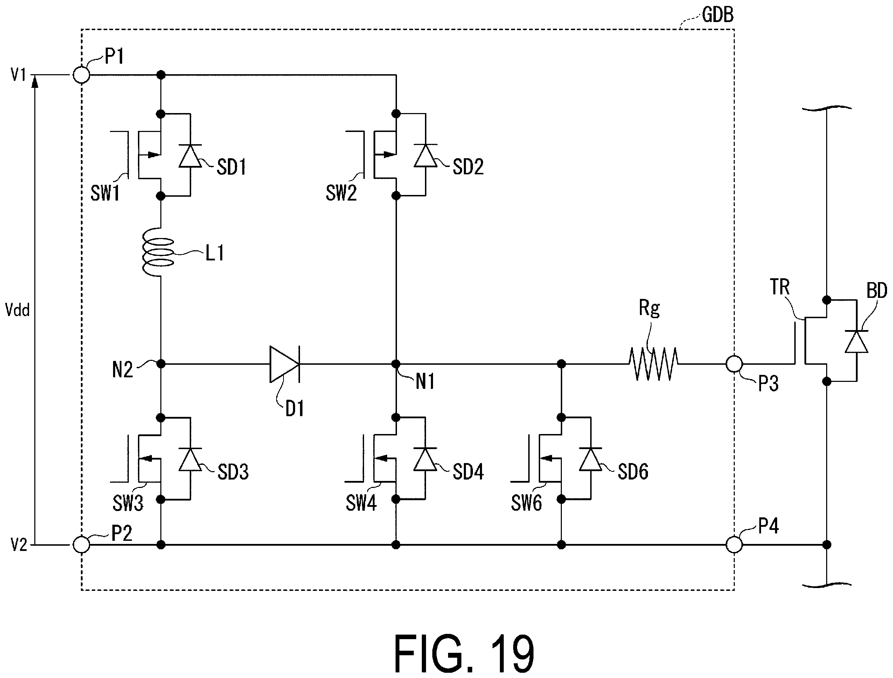

FIG. 19 is a diagram illustrating a specific example of the gate drive circuit GDB. As illustrated in FIG. 19, in the gate drive circuit GDB, it is preferable that the first switch SW1 and the second switch SW2 be P-channel MOS-FETs, and the third switch SW3, the fourth switch SW4, and the sixth switch SW6 be N-channel MOS-FETs.

The sixth switch SW6 includes a sixth body diode SD6 that is parasitic between the drain and the source of the sixth switch SW6, that is, an N-channel MOS-FET. As an equivalent circuit, an anode terminal of the sixth body diode SD6 is connected to the source terminal of the sixth switch SW6, and a cathode terminal of the sixth body diode SD6 is connected to the drain terminal of the sixth switch SW6.

The source terminal of the sixth switch SW6 is connected to the second terminal P2. The drain terminal of the sixth switch SW6 is connected to the first node N1. The gate terminal of the sixth switch SW6 is connected to the control unit 22. One control signal output from the control unit 22 is input to the gate terminal of the sixth switch SW6.

The configuration of the first switch SW1, the second switch SW2, the third switch SW3, and the fourth switch SW4 in the specific example of the gate drive circuit GDB is the same as that in the specific example of the gate drive circuit GDA illustrated in FIG. 11, and thus description thereof will be omitted.

In the specific example of the gate drive circuit GDB, when the first switch SW1 and the second switch SW2 are turned on, the second potential V2 or a potential between the first potential V1 and the second potential V2 may be applied to the respective gate terminals. When the third switch SW3, the fourth switch SW4, and the sixth switch SW6 are turned on, the first potential V1 or a potential between the first potential V1 and the second potential V2 may be applied to the respective gate terminals. That is, the first switch SW1, the second switch SW2, the third switch SW3, the fourth switch SW4, and the sixth switch SW6 can be driven within a voltage range between the first potential V1 and the second potential V2.

### Modifications

The present invention is not limited to the above-mentioned embodiment, and the respective configurations described in the present specification may be appropriately combined with each other, insofar as they are not inconsistent with one another. For example, the following modifications are adoptable.

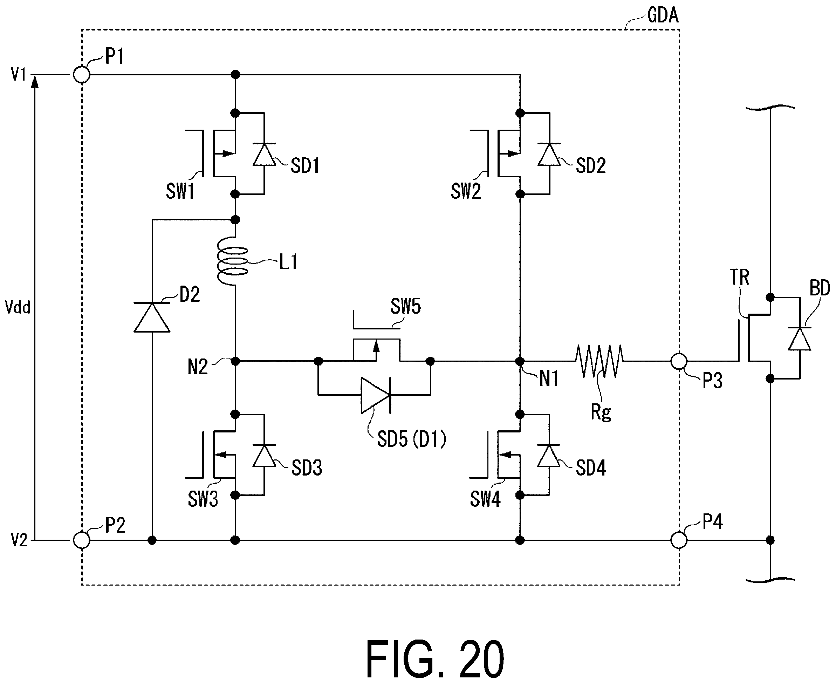

(1) FIG. 20 is a circuit configuration diagram illustrating a first modification of the gate drive circuit GDA. As illustrated in FIG. 20, the gate drive circuit GDA may further include a second diode D2. An anode terminal of the second diode D2 is connected to the second terminal P2. The first switch SW1 is connected between the first terminal P1 and the inductor L1, and a cathode terminal of the second diode D2 is connected to a connection point between the first switch SW1 and the inductor L1.

According to the first modification described above, surplus energy stored in the inductor L1 is regenerated to the power supply circuit 24 via the second diode D2, the inductor L1, the first diode D1 (or the fifth body diode SD5 of the fifth switch SW5), the second switch SW2 (or the second body diode SD2 of the second switch SW2), and the first terminal P1, causing driving with high efficiency, and suppressing the occurrence of surge at the drain terminal of the first switch SW1. When the first terminal P1 is connected to the first DC power source 2, the surplus energy stored in the inductor L1 is regenerated to the first DC power source 2.

Note that the configuration illustrated in FIG. 20 may be applied to the gate drive circuit GDB of the second embodiment.

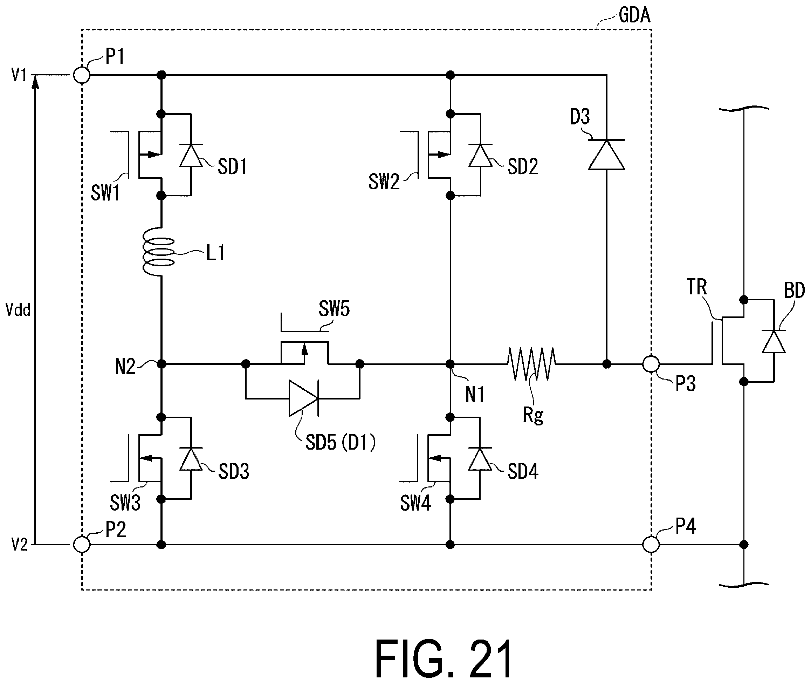

(2) FIG. 21 is a circuit configuration diagram illustrating a second modification of the gate drive circuit GDA. As illustrated in FIG. 21, the gate drive circuit GDA may further include a third diode D3. An anode terminal of the third diode D3 is connected to the third terminal P3. A cathode terminal of the third diode D3 is connected to the first terminal P1.

When energy stored in the inductor L1 is excessive, the gate voltage of the switching element TR significantly rises, which may cause the switching element TR to break down. By providing the third diode D3 as described above, the gate voltage of the switching element TR is clamped at the first power supply voltage Vdd, and thus, the breakage of the switching element TR can be avoided.

Note that the configuration illustrated in FIG. 21 may be applied to the gate drive circuit GDB of the second embodiment. Further, the third diode D3 may be used in combination with the second diode D2 described in the first modification.

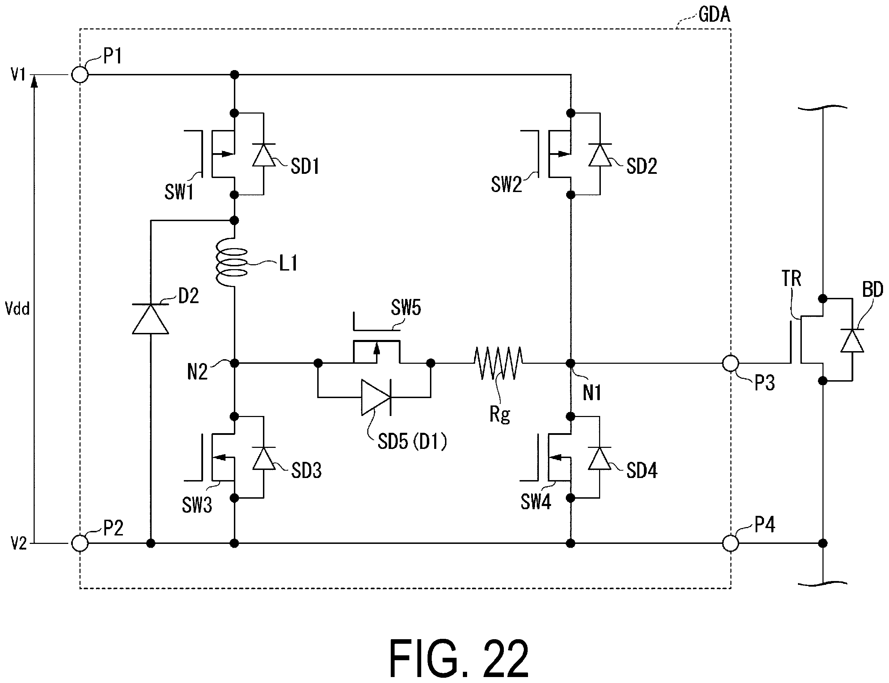

(3) FIG. 22 is a circuit configuration diagram illustrating a third modification of the gate drive circuit GDA. As illustrated in FIG. 22, the resistor element Rg may be connected between the first node N1 and the fifth switch SW5. The resistor element Rg in this case may be substituted by the resistance value of the fifth switch SW5. In addition, in this case, the first node N1 is directly connected to the third terminal P3.

According to the third modification, since the second switch SW2 serves as the third diode D3 described in the second modification, it is not necessary to add the third diode D3 in order to avoid the breakage of the switching element TR.

Note that the configuration illustrated in FIG. 22 may be applied to the gate drive circuit GDB of the second embodiment. Further, the configuration illustrated in FIG. 22 may be used together with the second diode D2 described in the first modification.

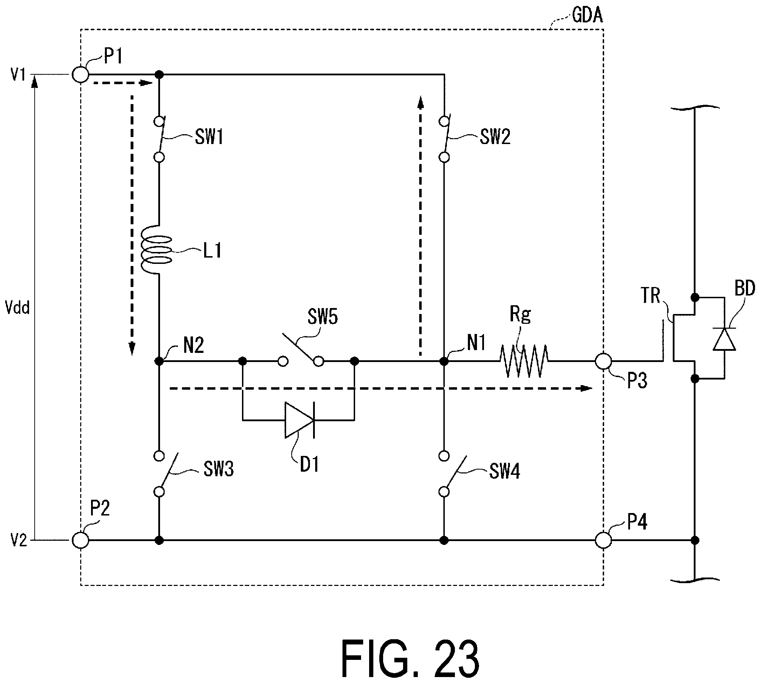

(4) FIG. 23 is a circuit configuration diagram illustrating a fourth modification of the gate drive circuit GDA. As described with reference to FIG. 5, the second switch SW2 may be turned off at the third timing, but as illustrated in FIG. 23, the second switch SW2 may be turned on at the third timing. In this case, the resistance value of the second switch SW2 is preferably higher than the resistance value of the resistor element Rg.

As illustrated in FIG. 23, when the second switch SW2 is turned on at the third timing, a current of the inductor L1 flows to the first terminal P1 via the second switch SW2. However, since the resistance value of the second switch SW2 is relatively high, the potential of the first node N1 becomes higher than the positive potential of the first power supply voltage Vdd, that is, the first potential V1. As a result, the input capacitance of the switching element TR is charged with a voltage higher than the first power supply voltage Vdd after the third timing, as compared with the state before the third timing, and thus the charging speed of the input capacitance of the switching element TR increases.

Note that in the gate drive circuit GDB of the second embodiment, the second switch SW2 may be turned on at the third timing.

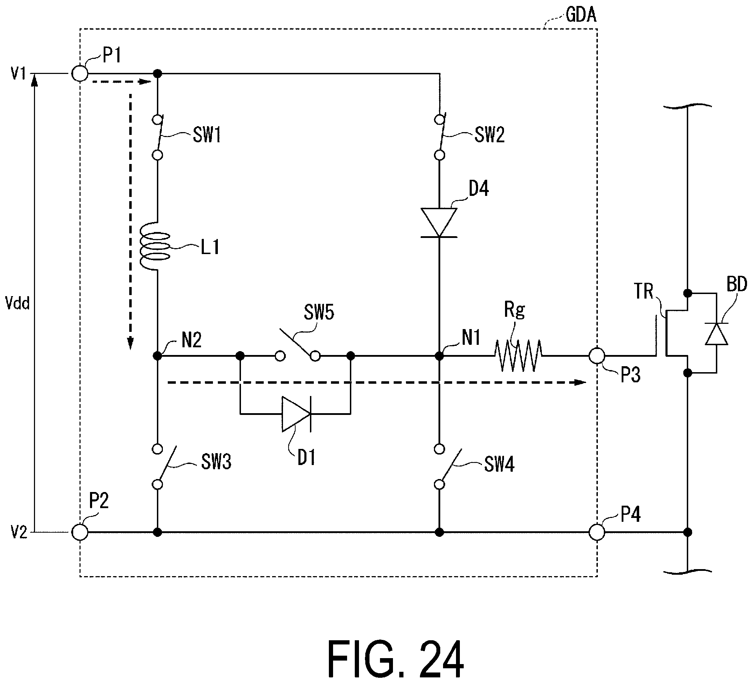

(5) FIG. 24 is a circuit configuration diagram illustrating a fifth modification of the gate drive circuit GDA. As illustrated in FIG. 24, the gate drive circuit GDA may further include a fourth diode D4 connected between the first node N1 and the second switch SW2. An anode terminal of the fourth diode D4 is connected to the second switch SW2, and a cathode terminal of the fourth diode D4 is connected to the first node N1.

According to the fifth modification described above, as illustrated in FIG. 24, even when the second switch SW2 is turned on at the third timing, current flow from the first node N1 toward the first terminal P1 via the second switch SW2 can be avoided. As a result, all the current of the inductor L1 flows into the gate terminal of the switching element TR via the resistor element Rg and the third terminal P3, and thus, the charging speed of the input capacitance of the switching element TR can be increased as compared with the fourth modification.

Note that the configuration illustrated in FIG. 24 may be applied to the gate drive circuit GDB of the second embodiment.

When the specific example of the gate drive circuit GDA illustrated in FIG. 11 is adopted, the second switch SW2 includes the second body diode SD2, and thus, a current flows from the first node N1 toward the first terminal P1 via the second body diode SD2 regardless of whether the second switch SW2 is turned on or off at the third timing. Therefore, in this case as well, it is preferable to set the resistance value of the second switch SW2 to be higher than the resistance value of the resistor element Rg, or to connect the fourth diode D4 between the first node N1 and the second switch SW2. The same or similar applies to the case of adopting the specific example of the gate drive circuit GDB illustrated in FIG. 19.

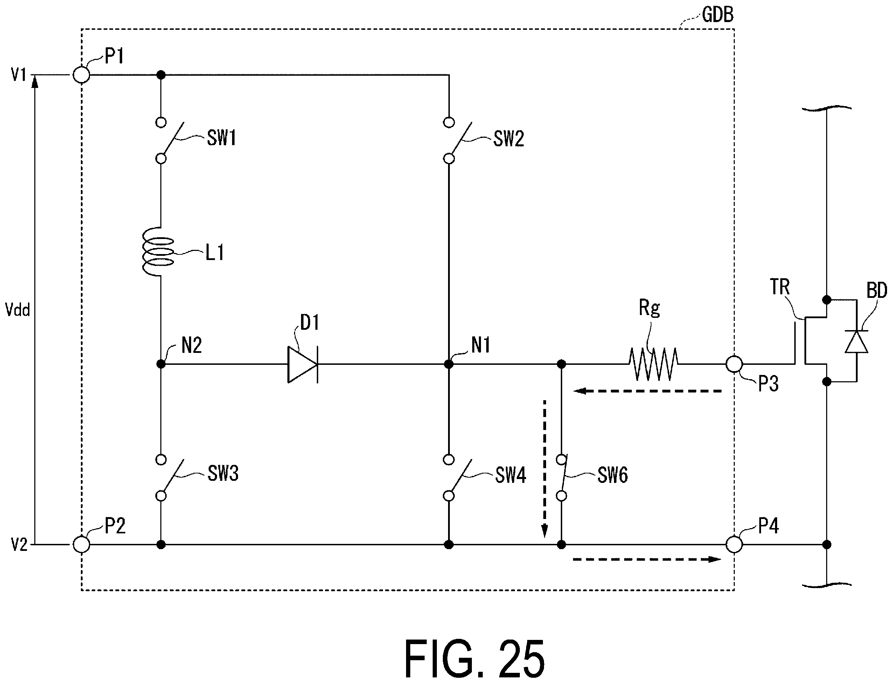

(6) FIG. 25 is a circuit configuration diagram illustrating a first modification of the gate drive circuit GDB. In the gate drive circuit GDB of the second embodiment, when the on-resistance value of the sixth switch SW6 is smaller than the on-resistance value of the fourth switch SW4, the control unit 22 may control the gate drive circuit GDB as follows. That is, when the switching element TR is turned off, the control unit 22 turns off the first switch SW1, the second switch SW2, and the fourth switch SW4 and turns on the sixth switch SW6 at the fourth timing. As a result, after the fourth timing, a current flows through a path indicated by dashed arrows in FIG. 25.

In this case, after the fourth timing, the current flows through the third terminal P3, the resistor element Rg, and the sixth switch SW6 in this order, and the current is caused to flow into a wiring line connected to the source terminal of the switching element TR via the fourth terminal P4.

Note that although the third switch SW3 is in the off state in FIG. 25, the third switch SW3 may be turned on at the fourth timing.

The control unit 22 turns off the sixth switch SW6 at the fifth timing after the fourth timing. As a result, after the fifth timing, a current flows through a path indicated by dashed arrows in FIG. 18. That is, after the fifth timing, a current flows through the third terminal P3, the resistor element Rg, the first node N1, and the fourth switch SW4 in this order, and the current is caused to flow into the wiring line connected to the source terminal of the switching element TR via the fourth terminal P4.

As described above, when the switching element TR is turned off, the input capacitance of the switching element TR is discharged only through the discharging path including the sixth switch SW6 in the initial stage of the turning-off operation. This increases the discharge speed of the input capacitance of the switching element TR, thereby reducing the switching loss at the time of turning off. In addition, the input capacitance of the switching element TR is discharged only through the discharging path including the fourth switch SW4 from the fifth timing, which is a time point before a time point at which the peak of a surge voltage appears in the drain-source voltage Vds. This reduces the discharge speed before the peak of the surge voltage appears in the drain-source voltage Vds, thereby reducing the height of the peak of the surge voltage. As a result, noise and surge generated at the time of turning off can be suppressed.

As understood from the above description, the discharging circuit included in the first modification of the gate drive circuit GDB has a configuration in which a path through which a discharge current flows from the gate terminal of the switching element TR is switched between the first discharging path and the second discharging path having a resistance value higher than that of the first discharging path. The first discharging path is a discharging path including the sixth switch SW6. The second discharging path is a discharging path including the fourth switch SW4. It will be understood from the above description that the discharging circuit performs discharging through the first discharging path and then performs discharging through the second discharging path when the switching element TR is turned off.

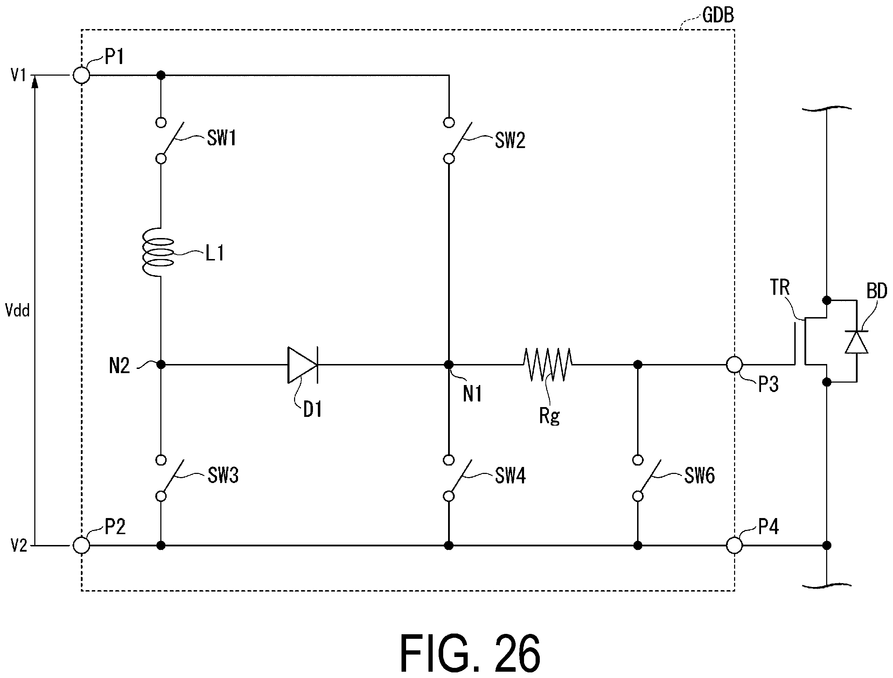

(7) FIG. 26 is a circuit configuration diagram illustrating a second modification of the gate drive circuit GDB. As illustrated in FIG. 26, the sixth switch SW6 may be connected between the second terminal P2 and the third terminal P3. To be more specific, one end of the sixth switch SW6 is connected to the second terminal P2, and the other end of the sixth switch SW6 is connected to a wiring line connecting the resistor element Rg and the third terminal P3.

According to the second modification of the gate drive circuit GDB, since the resistance value of the path passing through the third terminal P3, the sixth switch SW6, and the fourth terminal P4 is smaller than the resistance value of the path passing through the third terminal P3, the resistor element Rg, the fourth switch SW4, and the fourth terminal P4, the control unit 22 may turn off the first switch SW1, the second switch SW2, and the fourth switch SW4 and turn on the sixth switch SW6 at the fourth timing when the switching element TR is turned off, as described in the first modification of the gate drive circuit GDB. Note that even in this case, the control unit 22 may turn on the fourth switch SW4 and the sixth switch SW6 at the same time at the fourth timing.

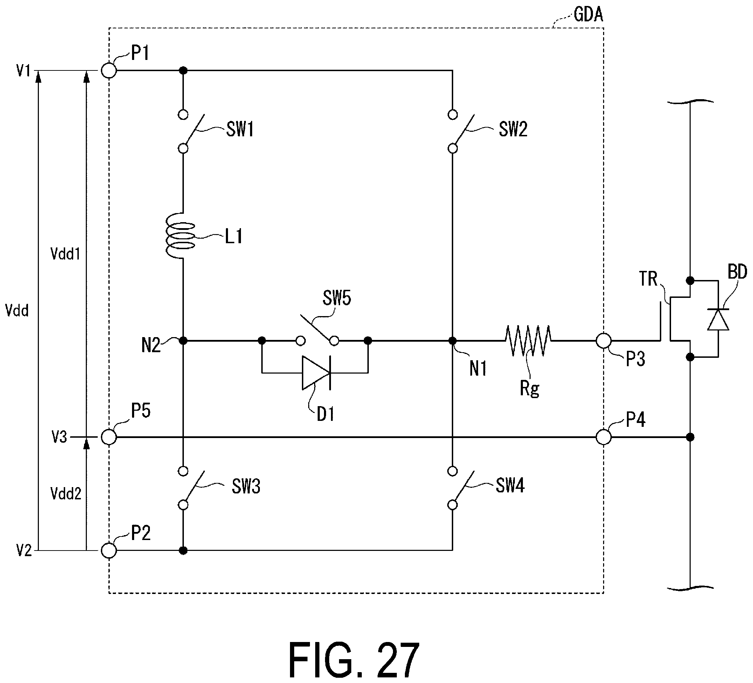

(8) FIG. 27 is a circuit configuration diagram illustrating a sixth modification of the gate drive circuit GDA. As illustrated in FIG. 27, the gate drive circuit GDA may include a fifth terminal P5 to which a third potential V3 lower than the first potential V1 and higher than the second potential V2 is applied. In this case, the fourth terminal P4 is directly connected to the fifth terminal P5.

The sum of a potential difference Vdd1 between the first potential V1 and the third potential V3 and a potential difference Vdd2 between the third potential V3 and the second potential V2 is equal to the first power supply voltage Vdd. When the third modification of the gate drive circuit GDA is adopted, the power supply circuit 24 generates a DC voltage corresponding to the potential difference Vdd1 and a DC voltage corresponding to the potential difference Vdd2, and outputs the generated DC voltages to the gate drive circuit GDA.

As described above, by adopting, for the source terminal of the switching element TR, a configuration in which the second terminal P2 connected with the third switch SW3 and the fourth switch SW4 have a negative voltage, the turning-off operation of the switching element TR can be sped up, and thus, the switching loss at the time of turning off can be further reduced. In addition, when a configuration using the high-side switching elements TR and the low-side switching elements TR is adopted as in the bridge circuit 21, the occurrence of erroneous ignition can be suppressed.

Note that the configuration illustrated in FIG. 27 may be applied to the gate drive circuit GDB of the second embodiment.

The sixth modification of the gate drive circuit GDA may be combined with at least one of the first modification, the second modification, the third modification, the fourth modification, and the fifth modification of the gate drive circuit GDA. When the sixth modification of the gate drive circuit GDA is combined with the first modification of the gate drive circuit GDA, the anode terminal of the second diode D2 is connected to the fifth terminal P5, instead of the second terminal P2.

Note that the present technique may have the following configurations. (1) A gate drive circuit configured to drive a switching element, the gate drive circuit including a charging circuit configured to charge input capacitance of the switching element by applying a gate voltage to a gate terminal of the switching element, and a discharging circuit configured to discharge the input capacitance, in which the charging circuit includes a first charging path including a series circuit in which a first switch and an inductor are connected in series between a first terminal and a first node, and a second charging path in which a second switch is connected between the first terminal and the first node, and is configured to perform charging through the second charging path and then perform charging through the first charging path when the switching element is turned on, and the discharging circuit is configured to switch a path through which a discharge current flows from the gate terminal between a first discharging path and a second discharging path having a resistance value higher than a resistance value of the first discharging path.

(2) The gate drive circuit according to (1), in which the discharging circuit performs discharging through the first discharging path and then performs discharging through the second discharging path when the switching element is turned off.

(3) The gate drive circuit according to (1) or (2), further including the first terminal to which a first potential is applied, a second terminal to which a second potential lower than the first potential is applied, and a third terminal connected to the gate terminal of the switching element, the third terminal being directly or indirectly connected to the first node, in which the charging circuit includes the first switch and the inductor connected in series between the first terminal and a second node, the second switch connected between the first terminal and the first node, a third switch connected between the second terminal and the second node, and a first diode including an anode terminal connected to the second node and a cathode terminal connected to the first node, and the discharging circuit includes the third switch, a fourth switch connected between the second terminal and the first node, and a fifth switch connected between the first node and the second node.

(4) The gate drive circuit according to (3), in which each of the first switch and the second switch is a P-channel MOS-FET, and each of the third switch, the fourth switch, and the fifth switch is an N-channel MOS-FET.

(5) The gate drive circuit according to (1) or (2), further including the first terminal to which a first potential is applied, a second terminal to which a second potential lower than the first potential is applied, and a third terminal connected to the gate terminal of the switching element, the third terminal being directly or indirectly connected to the first node, in which the charging circuit includes the first switch and the inductor connected in series between the first terminal and a second node, the second switch connected between the first terminal and the first node, a third switch connected between the second terminal and the second node, and a first diode including an anode terminal connected to the second node and a cathode terminal connected to the first node, and the discharging circuit includes a fourth switch connected between the second terminal and the first node, and a sixth switch connected between the second terminal and the first node.

(6) The gate drive circuit according to (5), in which each of the first switch and the second switch is a P-channel MOS-FET, and each of the third switch, the fourth switch, and the sixth switch is an N-channel MOS-FET.

(7) The gate drive circuit according to any one of (3) to (6), further including a resistor element connected between the first node and the third terminal.

(8) The gate drive circuit according to any one of (3) to (7), further including a fourth terminal connected to a source terminal or an emitter terminal of the switching element, in which the fourth terminal is directly connected to the second terminal.

(9) The gate drive circuit according to (8), further including a second diode, in which the first switch is connected between the first terminal and the inductor, an anode terminal of the second diode is connected to the second terminal, and a cathode terminal of the second diode is connected to a connection point between the first switch and the inductor.

(10) The gate drive circuit according to any one of (3) to (7), further including a fourth terminal connected to a source terminal or an emitter terminal of the switching element, and a fifth terminal to which a third potential lower than the first potential and higher than the second potential is applied, in which the fourth terminal is directly connected to the fifth terminal.

(11) The gate drive circuit according to (10), further including a second diode, in which the first switch is connected between the first terminal and the inductor, an anode terminal of the second diode is connected to the fifth terminal, and a cathode terminal of the second diode is connected to a connection point between the first switch and the inductor.

(12) The gate drive circuit according to any one of (3) to (11), further including a third diode including an anode terminal connected to the third terminal and a cathode terminal connected to the first terminal.

(13) A power conversion device including a bridge circuit including a plurality of switching elements, a plurality of gate drive circuits provided corresponding one by one to the plurality of switching elements, the plurality of gate drive circuits being configured to individually drive the corresponding switching elements, and a control unit configured to control the plurality of gate drive circuits, in which each of the plurality of gate drive circuits includes a charging circuit configured to charge input capacitance of the corresponding switching element by applying a gate voltage to a gate terminal of the corresponding switching element, and a discharging circuit configured to discharge the input capacitance, the charging circuit includes a first charging path including a series circuit in which a first switch and an inductor are connected in series between a first terminal and a first node, and a second charging path in which a second switch is connected between the first terminal and the first node, and is configured to perform charging through the second charging path and then to perform charging through the first charging path when the switching element is turned on, and the discharging circuit is configured to switch a path through which a discharge current flows from the gate terminal between a first discharging path and a second discharging path having a resistance value higher than a resistance value of the first discharging path.

(14) The power conversion device according to (13), in which the discharging circuit performs discharging through the first discharging path and then performs discharging through the second discharging path when the switching element is turned off.

(15) The power conversion device according to (13) or (14), in which the gate drive circuit further includes the first terminal to which a first potential is applied, a second terminal to which a second potential lower than the first potential is applied, and a third terminal connected to the gate terminal of the corresponding switching element, the third terminal being directly or indirectly connected to the first node, the charging circuit includes the first switch and the inductor connected in series between the first terminal and a second node, the second switch connected between the first terminal and the first node, a third switch connected between the second terminal and the second node, and a first diode including an anode terminal connected to the second node and a cathode terminal connected to the first node, and the discharging circuit includes the third switch, a fourth switch connected between the second terminal and the first node, and a fifth switch connected between the first node and the second node.

(16) The power conversion device according to (15), in which each of the first switch and the second switch is a P-channel MOS-FET, and each of the third switch, the fourth switch, and the fifth switch is an N-channel MOS-FET.

(17) The power conversion device according to (15) or (16), in which when the switching element is turned on, the control unit turns on the first switch and the third switch and turns off the fifth switch at a first timing, turns on the second switch and turns off the fourth switch at a second timing that is before the first timing, at the first timing, or after the first timing, and turns off the third switch at a third timing after the second timing.

(18) The power conversion device according to (15) or (16), in which when the switching element is turned off, the control unit turns off the first switch and the second switch and turns on the third switch, the fourth switch, and the fifth switch at a fourth timing, and turns off at least one of the third switch and the fifth switch at a fifth timing after the fourth timing.

(19) The power conversion device according to (13) or (14), in which the gate drive circuit further includes the first terminal to which a first potential is applied, a second terminal to which a second potential lower than the first potential is applied, and a third terminal connected to the gate terminal of the switching element, the third terminal being directly or indirectly connected to the first node, the charging circuit includes the first switch and the inductor connected in series between the first terminal and a second node, the second switch connected between the first terminal and the first node, a third switch connected between the second terminal and the second node, and a first diode including an anode terminal connected to the second node and a cathode terminal connected to the first node, and the discharging circuit includes a fourth switch connected between the second terminal and the first node, and a sixth switch connected between the second terminal and the first node.

(20) The power conversion device according to (19), in which each of the first switch and the second switch is a P-channel MOS-FET, and each of the third switch, the fourth switch, and the sixth switch is an N-channel MOS-FET.

(21) The power conversion device according to (19) or (20), in which when the switching element is turned on, the control unit turns on the first switch and the third switch at a first timing, turns on the second switch and turns off the fourth switch and the sixth switch at a second timing that is before the first timing, at the first timing, or after the first timing, and turns off the third switch at a third timing after the second timing.

(22) The power conversion device according to (19) or (20), in which when the switching element is turned off, the control unit turns off the first switch and the second switch and turns on the fourth switch and the sixth switch at a fourth timing, and turns off the sixth switch at a fifth timing after the fourth timing.

(23) The power conversion device according to any one of (15) to (22), in which the gate drive circuit further includes a resistor element connected between the first node and the third terminal.

(24) The power conversion device according to any one of (15) to (23), in which the gate drive circuit further includes a fourth terminal connected to a source terminal or an emitter terminal of the switching element, and the fourth terminal is directly connected to the second terminal.

(25) The power conversion device according to (24), in which the gate drive circuit further includes a second diode, the first switch is connected between the first terminal and the inductor, an anode terminal of the second diode is connected to the second terminal, and a cathode terminal of the second diode is connected to a connection point between the first switch and the inductor.

(26) The power conversion device according to any one of (15) to (23), in which the gate drive circuit further includes a fourth terminal connected to a source terminal or an emitter terminal of the switching element, and a fifth terminal to which a third potential lower than the first potential and higher than the second potential is applied, and the fourth terminal is directly connected to the fifth terminal.

(27) The power conversion device according to (26), in which the gate drive circuit further includes a second diode, the first switch is connected between the first terminal and the inductor, an anode terminal of the second diode is connected to the fifth terminal, and a cathode terminal of the second diode is connected to a connection point between the first switch and the inductor.

(28) The power conversion device according to any one of (15) to (27), in which the gate drive circuit further includes a third diode including an anode terminal connected to the third terminal and a cathode terminal connected to the first terminal.

(29) A motor unit including a motor, and the power conversion device according to any one of (13) to (28), the power conversion device being configured to supply power to the motor.

### Reference Signs List

1 Motor unit, 2 First DC power source, 3 Second DC power source, 10 Motor, 20 Power conversion device, 21 Bridge circuit, 22 Control unit, 23 Smoothing capacitor, 24 Power supply circuit, GD1 to GD6, GDA, GDB Gate drive circuit, TR1 to TR6 TR Switching element, P1 First terminal, P2 Second terminal, P3 Third terminal, P4 Fourth terminal, P5 Fifth terminal, SW1 First switch, SW2 Second switch, SW3 Third switch, SW4 Fourth switch, SW5 Fifth switch, SW6 Sixth switch, L1 Inductor, D1 First diode, Rg Resistor element, N1 First node, N2 Second node

## Claims

1. A gate drive circuit configured to drive a switching element, the gate drive circuit comprising:
a charging circuit configured to charge input capacitance of the switching element by applying a gate voltage to a gate terminal of the switching element; and
a discharging circuit configured to discharge the input capacitance, wherein
the charging circuit includes
a first charging path including a series circuit in which a first switch and an inductor are connected in series between a first terminal and a first node, and
a second charging path in which a second switch is connected between the first terminal and the first node, and is configured to perform charging through the second charging path and then perform charging through the first charging path when the switching element is turned on, and
the discharging circuit is configured to switch a path through which a discharge current flows from the gate terminal between a first discharging path and a second discharging path having a resistance value higher than a resistance value of the first discharging path.

2. The gate drive circuit according to claim 1, wherein
the discharging circuit performs discharging through the first discharging path and then performs discharging through the second discharging path when the switching element is turned off.

3. The gate drive circuit according to claim 2, further comprising:
the first terminal to which a first potential is applied;
a second terminal to which a second potential lower than the first potential is applied; and
a third terminal connected to the gate terminal of the switching element, the third terminal being directly or indirectly connected to the first node, wherein
the charging circuit includes
the first switch and the inductor connected in series between the first terminal and a second node,
the second switch connected between the first terminal and the first node,
a third switch connected between the second terminal and the second node, and
a first diode including an anode terminal connected to the second node and a cathode terminal connected to the first node, and
the discharging circuit includes
the third switch,
a fourth switch connected between the second terminal and the first node, and
a fifth switch connected between the first node and the second node.

4. The gate drive circuit according to claim 3, wherein
each of the first switch and the second switch is a P-channel MOS-FET, and
each of the third switch, the fourth switch, and the fifth switch is an N-channel MOS-FET.

5. The gate drive circuit according to claim 2, further comprising:
the first terminal to which a first potential is applied;
a second terminal to which a second potential lower than the first potential is applied;
a third terminal connected to the gate terminal of the switching element, the third terminal being directly or indirectly connected to the first node, wherein
the charging circuit includes
the first switch and the inductor connected in series between the first terminal and a second node,
the second switch connected between the first terminal and the first node,
a third switch connected between the second terminal and the second node, and
a first diode including an anode terminal connected to the second node and a cathode terminal connected to the first node, and
the discharging circuit includes
a fourth switch connected between the second terminal and the first node, and
a sixth switch connected between the second terminal and the first node.

6. The gate drive circuit according to claim 5, wherein
each of the first switch and the second switch is a P-channel MOS-FET, and
each of the third switch, the fourth switch, and the sixth switch is an N-channel MOS-FET.

7. The gate drive circuit according to any one of claims 3 to 6, further comprising:
a resistor element connected between the first node and the third terminal.

8. The gate drive circuit according to any one of claims 3 to 6, further comprising:
a fourth terminal connected to a source terminal or an emitter terminal of the switching element, wherein
the fourth terminal is directly connected to the second terminal.

9. The gate drive circuit according to claim 8, further comprising:
a second diode, wherein
the first switch is connected between the first terminal and the inductor,
an anode terminal of the second diode is connected to the second terminal, and
a cathode terminal of the second diode is connected to a connection point between the first switch and the inductor.

10. The gate drive circuit according to any one of claims 3 to 6, further comprising:
a fourth terminal connected to a source terminal or an emitter terminal of the switching element; and
a fifth terminal to which a third potential lower than the first potential and higher than the second potential is applied, wherein
the fourth terminal is directly connected to the fifth terminal.

11. The gate drive circuit according to claim 10, further comprising:
a second diode, wherein
the first switch is connected between the first terminal and the inductor,
an anode terminal of the second diode is connected to the fifth terminal, and
a cathode terminal of the second diode is connected to a connection point between the first switch and the inductor.

12. The gate drive circuit according to any one of claims 3 to 6, further comprising:
a third diode including an anode terminal connected to the third terminal and a cathode terminal connected to the first terminal.

13. A power conversion device comprising:
a bridge circuit including a plurality of switching elements;
a plurality of gate drive circuits provided corresponding one by one to the plurality of switching elements, the plurality of gate drive circuits being configured to individually drive the corresponding switching elements; and
a control unit configured to control the plurality of gate drive circuits, wherein
each of the plurality of gate drive circuits includes
a charging circuit configured to charge input capacitance of the corresponding switching element by applying a gate voltage to a gate terminal of the corresponding switching element, and
a discharging circuit configured to discharge the input capacitance,
the charging circuit includes a first charging path including a series circuit in which a first switch and an inductor are connected in series between a first terminal and a first node, and a second charging path in which a second switch is connected between the first terminal and the first node, and is configured to perform charging through the second charging path and then to perform charging through the first charging path when the switching element is turned on, and
the discharging circuit is configured to switch a path through which a discharge current flows from the gate terminal between a first discharging path and a second discharging path having a resistance value higher than a resistance value of the first discharging path.

14. The power conversion device according to claim 13, wherein
the discharging circuit performs discharging through the first discharging path and then performs discharging through the second discharging path when the switching element is turned off.

15. The power conversion device according to claim 14, wherein
the gate drive circuit further includes
the first terminal to which a first potential is applied,
a second terminal to which a second potential lower than the first potential is applied, and
a third terminal connected to the gate terminal of the corresponding switching element, the third terminal being directly or indirectly connected to the first node,
the charging circuit includes
the first switch and the inductor connected in series between the first terminal and a second node,
the second switch connected between the first terminal and the first node,
a third switch connected between the second terminal and the second node, and
a first diode including an anode terminal connected to the second node and a cathode terminal connected to the first node, and
the discharging circuit includes
the third switch,
a fourth switch connected between the second terminal and the first node, and
a fifth switch connected between the first node and the second node.

16. The power conversion device according to claim 15, wherein
each of the first switch and the second switch is a P-channel MOS-FET, and
each of the third switch, the fourth switch, and the fifth switch is an N-channel MOS-FET.

17. The power conversion device according to claim 15, wherein
when the switching element is turned on, the control unit
turns on the first switch and the third switch and turns off the fifth switch at a first timing,
turns on the second switch and turns off the fourth switch at a second timing that is before the first timing, at the first timing, or after the first timing, and
turns off the third switch at a third timing after the second timing.

18. The power conversion device according to claim 15, wherein
when the switching element is turned off, the control unit
turns off the first switch and the second switch and turns on the third switch, the fourth switch, and the fifth switch at a fourth timing, and
turns off at least one of the third switch and the fifth switch at a fifth timing after the fourth timing.

19. The power conversion device according to claim 14, wherein
the gate drive circuit further includes
the first terminal to which a first potential is applied,
a second terminal to which a second potential lower than the first potential is applied, and
a third terminal connected to the gate terminal of the switching element, the third terminal being directly or indirectly connected to the first node,
the charging circuit includes
the first switch and the inductor connected in series between the first terminal and a second node,
the second switch connected between the first terminal and the first node,
a third switch connected between the second terminal and the second node, and
a first diode including an anode terminal connected to the second node and a cathode terminal connected to the first node, and
the discharging circuit includes
a fourth switch connected between the second terminal and the first node, and
a sixth switch connected between the second terminal and the first node.

20. The power conversion device according to claim 19, wherein
each of the first switch and the second switch is a P-channel MOS-FET, and
each of the third switch, the fourth switch, and the sixth switch is an N-channel MOS-FET.

21. The power conversion device according to claim 19, wherein
when the switching element is turned on, the control unit
turns on the first switch and the third switch at a first timing,
turns on the second switch and turns off the fourth switch and the sixth switch at a second timing that is before the first timing, at the first timing, or after the first timing, and
turns off the third switch at a third timing after the second timing.

22. The power conversion device according to claim 19, wherein
when the switching element is turned off, the control unit
turns off the first switch and the second switch and turns on the fourth switch and the sixth switch at a fourth timing, and
turns off the sixth switch at a fifth timing after the fourth timing.

23. The power conversion device according to any one of claims 15 to 22, wherein
the gate drive circuit further includes a resistor element connected between the first node and the third terminal.

24. The power conversion device according to any one of claims 15 to 22, wherein
the gate drive circuit further includes a fourth terminal connected to a source terminal or an emitter terminal of the switching element, and
the fourth terminal is directly connected to the second terminal.

25. The power conversion device according to claim 24, wherein
the gate drive circuit further includes a second diode,
the first switch is connected between the first terminal and the inductor,
an anode terminal of the second diode is connected to the second terminal, and
a cathode terminal of the second diode is connected to a connection point between the first switch and the inductor.

26. The power conversion device according to any one of claims 15 to 22, wherein
the gate drive circuit further includes
a fourth terminal connected to a source terminal or an emitter terminal of the switching element, and
a fifth terminal to which a third potential lower than the first potential and higher than the second potential is applied, and
the fourth terminal is directly connected to the fifth terminal.

27. The power conversion device according to claim 26, wherein
the gate drive circuit further includes a second diode,
the first switch is connected between the first terminal and the inductor,
an anode terminal of the second diode is connected to the fifth terminal, and
a cathode terminal of the second diode is connected to a connection point between the first switch and the inductor.

28. The power conversion device according to any one of claims 15 to 22, wherein
the gate drive circuit further includes a third diode including an anode terminal connected to the third terminal and a cathode terminal connected to the first terminal.

29. A motor unit comprising:
a motor; and
the power conversion device according to any one of claims 13 to 22, the power conversion device being configured to supply power to the motor.
